# EUROPEAN PATENT APPLICATION

(11) **EP 4 847 379 A1**
(43) Date of publication of application: **02.12.2026**
(21) Application number: 26179863.1
(22) Date of filing: 20.05.2026
(51) Int. Cl.: B64C 11/38, F01D 7/00

(54) **A TURBO ENGINE INCLUDING A SYSTEM TO CONTROL PITCH OF A PROPELLER BLADE**

(30) Priority: 30.05.2025 GB 202508527; 22.04.2026 US 202619655407
(71) Applicant: GE Aviation Systems Limited, Bishops Cleeve Cheltenham Gloucestershire GL52 8SF (GB)
(72) Inventor: CARRINGTON, Christopher Roy, Gloucester, GL3 4AQ (GB)
(74) Representative: Openshaw & Co.

(57) **Abstract**

An example engine includes a protection valve controller (354) to output a first control signal to cause a spool valve (321) to move to a first position to cause hydraulic fluid to flow from one of (a) the first input (330) of a protection valve (318) to the fine pitch chamber (347) or (b) a second input (331) of the protection valve (318) to the coarse pitch chamber (349), wherein a pitch angle of the blade (106) is at a first pitch angle when the spool valve (321) is in the first position; detect that the pitch angle of the blade (106) has moved to a second pitch angle; determine that the second pitch angle of the blade (106) is below a threshold pitch angle; and based on the second pitch angle of the blade (106) being below the threshold pitch angle and an aircraft being in flight, output a second control signal to prevent the hydraulic fluid from reaching the fine pitch chamber (347).

## Description

### RELATED APPLICATION

This patent claims the benefit of British Patent Application No. 2508527.5, which was filed on May 30, 2025. British Patent Application Number 2508527.5 is hereby incorporated herein by reference in its entirety. Priority to British Patent Application Number 2508527.5 is hereby claimed.

### FIELD OF THE DISCLOSURE

The present disclosure relates generally to a turbo engine and, more particularly, to a turbo engine including a system to control pitch of a propeller blade.

### BACKGROUND

Turbo engines (e.g., turbofan engines, ducted fan engines, unducted fan engines, turboprop engines, etc.), such as those used on an aircraft, generally include a propeller/fan and a gas turbine engine to drive the propeller/fan to produce thrust. In some configurations, the propeller/fan has variable pitch blades. As such, the pitch of the blades can be changed during different phases of operation.

### BRIEF DESCRIPTION OF THE DRAWINGS

A full and enabling disclosure of the presently described technology, including the best mode thereof, directed to one of ordinary skill in the art, is set forth in the specification, which makes reference to the appended Figs., in which:
FIG. 1A is a schematic cross-sectional view of an example turbo engine in which examples disclosed herein can be implemented.
FIG. 1B is a schematic cross-sectional view of an example turboprop in which examples disclosed herein can be implemented.
FIG. 2 includes side views of blades of the propeller of the one or more engines of FIGS. 1A and 1B in three different pitch angles.
FIG. 3 illustrates an example implementation of the pitch control protection system of FIGS. 1A and 1B with a protection valve in a first position.
FIG. 4 illustrates an example implementation of the pitch control protection system of FIGS. 1A and 1B with a protection valve in a second position.
FIG. 5 illustrates an example implementation of the pitch control protection system of FIGS. 1A and 1B with a protection valve in a third position.
FIG. 6 illustrates an example implementation of the pitch control protection system of FIGS. 1A and 1B with a protection valve in a fourth position.
FIG. 7 illustrates example functions that may be implemented by a protection valve controller of FIGS. 3-6.
FIG. 8 is a block diagram of an example implementation of the protection valve controller of FIGS. 3-6.
FIG. 9 is a flowchart representative of example machine-readable instructions and/or operations that may be executed, instantiated, and/or performed by programmable circuitry to implement the protection valve controller of FIG. 8.
FIG. 10 is a flowchart representative of example machine-readable instructions and/or operations that may be executed, instantiated, and/or performed by programmable circuitry to implement the protection valve controller of FIG. 8.
FIG. 11 is a block diagram of an example processing platform including programmable circuitry structured to execute, instantiate, and/or perform the example machine-readable instructions and/or perform the example operations of FIG. 9 and 10 to implement the protection valve controller of FIG. 8.

The figures are not to scale. Instead, the thickness of regions may be enlarged in the drawings. In general, the same reference numbers will be used throughout the drawing(s) and accompanying written description to refer to the same or like parts. Connection references (e.g., attached, coupled, connected, and joined) are to be construed broadly and may include intermediate members between a collection of elements and relative movement between elements unless otherwise indicated. As such, connection references do not necessarily infer that two elements are directly connected and in fixed relation to each other. Stating that any part is in "contact" and/or "direct contact" with another part means that there is no intermediate part between the two parts.

### DETAILED DESCRIPTION

Reference now will be made in detail to embodiments or examples of the presently described technology, one or more examples of which are illustrated in the drawings. Each example is provided by way of explanation of the presently described technology, not limitation of the presently described technology. In fact, it will be apparent to those skilled in the art that various modifications and variations can be made in the presently described technology without departing from the scope or spirit of the presently described technology. For instance, features illustrated or described as part of one embodiment or example can be used with another embodiment or example to yield a still further embodiment or example. Thus, it is intended that the presently described technology covers such modifications and variations as come within the scope of the appended claims and their equivalents.

When introducing elements of various embodiments of the present disclosure, the articles "a," "an," "the," and "said" are intended to mean that there are one or more of the elements. As used herein, the terms "first," "second," and "third" may be used interchangeably to distinguish one component from another and are not intended to signify location or importance of the individual components. The terms "comprising," "including," and "having" are intended to be inclusive and mean that there may be additional elements other than the listed elements. As the terms "connected to," "coupled to," etc. are used herein, one object (e.g., a material, element, structure, member, etc.) can be connected to or coupled to another object regardless of whether the one object is directly connected or coupled to the other object or whether there are one or more intervening objects between the one object and the other object.

The terms "upstream" and "downstream" refer to the relative direction with respect to fluid flow in a fluid pathway. For example, "upstream" refers to the direction from which the fluid flows, and "downstream" refers to the direction to which the fluid flows. As used herein, the terms "axial" and "longitudinal" both refer to a direction parallel to the centerline axis of a gas turbine engine (e.g., a core turbine engine, turbo-machinery, etc.), while "radial" refers to a direction perpendicular to the axial direction, and "tangential" or "circumferential" refers to a direction mutually perpendicular to the axial and radial directions. Accordingly, as used herein, "radially inward" refers to the radial direction from the outer circumference of the gas turbine engine towards the centerline axis of the gas turbine engine, and "radially outward" refers to the radial direction from the centerline axis of the gas turbine engine towards the outer circumference of the gas turbine engine.

As used herein a "port" is an opening in a device (e.g., such as a valve) which fluid can flow into or out from. In some examples, a port may be referred to as an input (a port with fluid flowing in) and/or an output (a port with fluid flowing out).

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc. may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, and (7) A with B and with C. As used herein in the context of describing structures, components, items, objects and/or things, the phrase "at least one of A and B" is intended to refer to implementations including any of (1) at least one A, (2) at least one B, and (3) at least one A and at least one B. Similarly, as used herein in the context of describing structures, components, items, objects and/or things, the phrase "at least one of A or B" is intended to refer to implementations including any of (1) at least one A, (2) at least one B, and (3) at least one A and at least one B. As used herein in the context of describing the performance or execution of processes, instructions, actions, activities and/or steps, the phrase "at least one of A and B" is intended to refer to implementations including any of (1) at least one A, (2) at least one B, and (3) at least one A and at least one B. Similarly, as used herein in the context of describing the performance or execution of processes, instructions, actions, activities and/or steps, the phrase "at least one of A or B" is intended to refer to implementations including any of (1) at least one A, (2) at least one B, and (3) at least one A and at least one B.

As used herein, singular references (e.g., "a," "an," "first," "second," etc.) do not exclude a plurality. The term "a" or "an" entity, as used herein, refers to one or more of that entity. The terms "a" (or "an"), "one or more," and "at least one" can be used interchangeably herein. Additionally, although individual features may be included in different examples or claims, these may possibly be combined, and the inclusion in different examples or claims does not imply that a combination of features is not feasible and/or advantageous.

Some turbo engines used on aircraft, such as ducted fan engines, hybrid engines, turboprop engines, hybrid turboprop propellers, unducted fan engines, electric propulsion engines, and high bypass turbofan engines have variable pitch blades or vanes. In particular, the pitch (e.g., angle) of the blades relative to the incoming airflow can be changed during operation of the engine. This enables optimal operation of the turbo engine during the various flight phases. These types of engines include a blade pitch control system (also referred to as a pitch control unit (PCU)) to control the pitch of the blades. The blade pitch control system is hydraulically powered. Some turbo engines utilize protection systems (also referred to as pitch control protection systems) to automatically adjust blade pitch in the event of a failure or when blade propeller speed is too high, and/or enable ground range (e.g., low pitch angle). For example, in the event of failure of the hydraulic system and/or engine shut down during flight, it is desirable for the blades to move to a certain pitch position, referred to as a feather position, in which the blades cause the least (e.g., minimal) amount of resistance or drag. Protection systems can provide for auto-feathering or automatically moving the blades to the feather position to minimize resistance or drag. In some instances, the feather position corresponds to a position or angle in which the blades are substantially aligned (e.g., ±5°) with the direction of the incoming airflow. Ground range corresponds to moving the blade to a low pitch angle (e.g., for inspection or maintenance). Accordingly, protection systems may prevent the blade from going to such a fine pitch unless the aircraft is grounded (e.g., not in flight).

Traditional pitch control protection systems include a complex system of multiple valves (e.g., 9 valves) to implement pitch control protection. However, such systems require multiple components, which increases cost, space, weight, and the risk of failure. Examples disclosed herein protect pitch control protection with less valves (e.g., 4 or 5 valves). Accordingly, examples disclosed herein result in a cheaper, smaller, lighter, less complex, and more reliable pitch control protection system than previous techniques. Examples disclosed herein include a pressure relief valve, a primary control valve, a protection valve, and one or more ground range valves. The pressure relief valve releases pressure from a pump. The primary control valve controls the pitch of the blades based on user and/or system instructions by pumping hydraulic fluid into a first or second chamber of a piston assembly. As hydraulic fluid is pumped into the first or second chamber, a piston of the piston assembly moves in a first direction or a second direction. The movement of the piston is translated to movement of the pitch of the blade. The protection valve facilitates the pitch control of the primary control valve and overrides (e.g., blocks the fluid output by) the primary control valve in particular situations (e.g., loss of power, error in the main controller, propeller speed too high, blade pitch not matching instructions, etc.). The protection valve is structured to allow the primary valve to pump hydraulic fluid into the first or second chamber of the piston assembly. Additionally, the protection valve can override the primary control valve to halt pitch of the blade or change the pitch of the blade to provide alternative feathering (e.g., auto-feathering) and/or enable a ground range of the pitch.

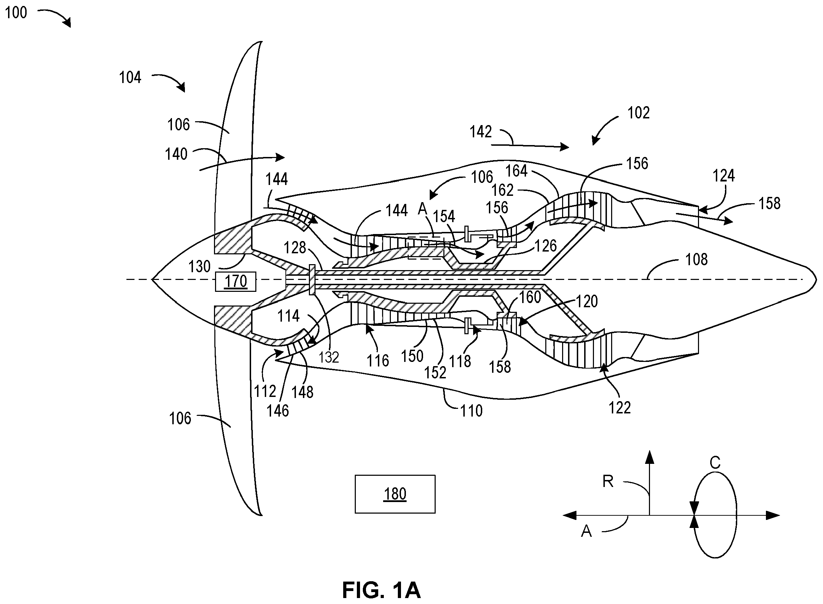

Referring now to the drawings, wherein identical numerals indicate the same elements throughout the figures, FIG. 1A is a schematic cross-sectional view of an example turbo engine assembly 100 that can incorporate various examples disclosed herein. The principles of the present disclosure are also applicable to various types of engines, such as turbofan engines (e.g., high-bypass turbofan engines, low-bypass turbofan engines), ducted fan engines, unducted fan engines (sometimes referred to as propfans), electric motor driver propellers, and/or other types of engines having a propulsor (e.g., a fan, a propeller, etc.) with variable pitch blades or vanes. Further, the examples disclosed herein can also be used in connection with other types of applications, such as electric fans or wind turbines having variable pitch fans.

As shown in FIG. 1A, turbo engine assembly 100 includes a gas turbine engine 102 (which may also be referred to as a core turbine engine or turbo-machinery) and a propeller 104 including a plurality of blades 106 (sometimes referred to as rotors, fan blades, or vanes). The propeller 104 can include any number of blades 106. The gas turbine engine 102 is disposed downstream from the propeller 104 and drives the blades 106 of the propeller 104 to produce forward thrust. In some examples, the propeller 104 is positioned behind the gas turbine engine 102. As shown in FIG. 1A, a propeller axis of the turbo engine assembly 100 and/or the gas turbine engine 102 define a longitudinal or axial centerline axis 108 extending therethrough for reference. However, in some examples, the propeller axis might not be aligned with the axial centerline axis 108. For example, some engine assemblies may include an offset gearbox causing the propeller axis to be different than the axial centerline axis 108. FIG. 1A also includes an annotated directional diagram with reference to an axial direction A, a radial direction R, and a circumferential direction C. In general, as used herein, the axial direction A is a direction that extends generally parallel to the centerline axis 108, the radial direction R is a direction that extends orthogonally outward from or inward toward the centerline axis 108, and the circumferential direction C is a direction that extends concentrically around the centerline axis 108. Further, as used herein, the term "forward" refers to a direction along the centerline axis 108 in the direction of movement of turbo engine assembly 100, such as to the left in FIG. 1A, while the term "rearward" refers to a direction along the centerline axis 108 in the opposite direction, such as to the right in FIG. 1A.

The gas turbine engine 102 includes a substantially tubular outer casing 110 (which may also be referred to as a mid-casing) that defines an annular inlet 112. The outer casing 110 of the gas turbine engine 102 can be formed from a single casing or multiple casings. The outer casing 110 encloses, in serial flow relationship, a compressor section having a booster or low pressure compressor 114 ("LP compressor 114") and a high pressure compressor 116 ("HP compressor 116"), a combustion section 118 (which may also be referred to as the combustor 118), a turbine section having a high pressure turbine 120 ("HP turbine 120") and a low pressure turbine 122 ("LP turbine 122"), and an exhaust section 124. The gas turbine engine 102 includes a high-pressure shaft or spool 126 ("HP shaft 126") that drivingly couples the HP turbine 120 and the HP compressor 116. The gas turbine engine 102 also includes a low-pressure shaft or spool 128 ("LP shaft 128") that drivingly couples the LP turbine 122 and the LP compressor 114. The LP shaft 128 also couples to a propeller spool or shaft 130 (sometimes referred to as a fan shaft). The blades 106 are coupled to and extend radially outward from the propeller shaft 130. In this example, the blades 106 are variable pitch blades. As such, the pitch of the blades 106 can be changed during operation of turbo engine assembly 100 to improve efficiency and achieve certain flow characteristics during different phases of flight. Example systems for changing the pitch of the blades 106 are disclosed in further detail herein. In some examples, the LP shaft 128 may couple directly to the propeller shaft 130 (i.e., a direct-drive configuration). In alternative configurations, the LP shaft 128 may couple to the propeller shaft 130 via a reduction gear 132 (i.e., an indirect-drive or geared-drive configuration). While in this example the gas turbine engine 102 includes two compressors and two turbines, in other examples, the gas turbine engine 102 may only include one compressor and one turbine. Additionally, some components may be removed, added, and/or combined for different types of turbo propeller engine assemblies.

As illustrated in FIG. 1A, during operation of turbo engine assembly 100, incoming air 140 enters the propeller 104 and is accelerated by the blades 106. A first portion 142 of the air 140 flows along the outside of the gas turbine engine 102, while a second portion 144 of the air 140 flows into the inlet 112 of the gas turbine engine 102 (and, thus, into the LP compressor 114). One or more sequential stages of LP compressor stator vanes 146 and LP compressor rotor blades 148 coupled to the LP shaft 128 progressively compress the second portion 144 of the air 140 flowing through the LP compressor 114 en route to the HP compressor 116. Next, one or more sequential stages of HP compressor stator vanes 150 and HP compressor rotor vanes 152 coupled to the HP shaft 126 further compress the second portion 144 of the air 140 flowing through the HP compressor 116. This provides compressed air 154 to the combustion section 118 where it mixes with fuel and burns to provide combustion gases 156.

The combustion gases 156 flow through the HP turbine 120 where one or more sequential stages of HP turbine stator vanes 158 and HP turbine rotor blades 160 coupled to the HP shaft 126 extract a first portion of kinetic and/or thermal energy. This energy extraction supports operation of the HP compressor 116. The combustion gases 156 then flow through the LP turbine 122 where one or more sequential stages of LP turbine stator vanes 162 and LP turbine rotor blades 164 coupled to the LP shaft 128 extract a second portion of thermal and/or kinetic energy therefrom. This energy extraction causes the LP shaft 128 to rotate, which supports operation of the LP compressor 114 and/or rotation of the propeller shaft 130. The combustion gases 156 then exit the gas turbine engine 102 through the exhaust section 124 thereof. The combustion gases 156 mix with the first portion 142 of the air 140 to produce propulsive thrust.

Along with turbo engine assembly 100, the gas turbine engine 102 serves a similar purpose and sees a similar environment in land-based gas turbines, and turbofan and turbojet engines in which the ratio of the first portion 142 of the air 140 to the second portion 144 of the air 140 is different. In each of the engines, a speed reduction device (e.g., the reduction gear 132) may be included between any shafts and spools. For example, the reduction gear 132 may be disposed between the LP shaft 128 and the propeller shaft 130.

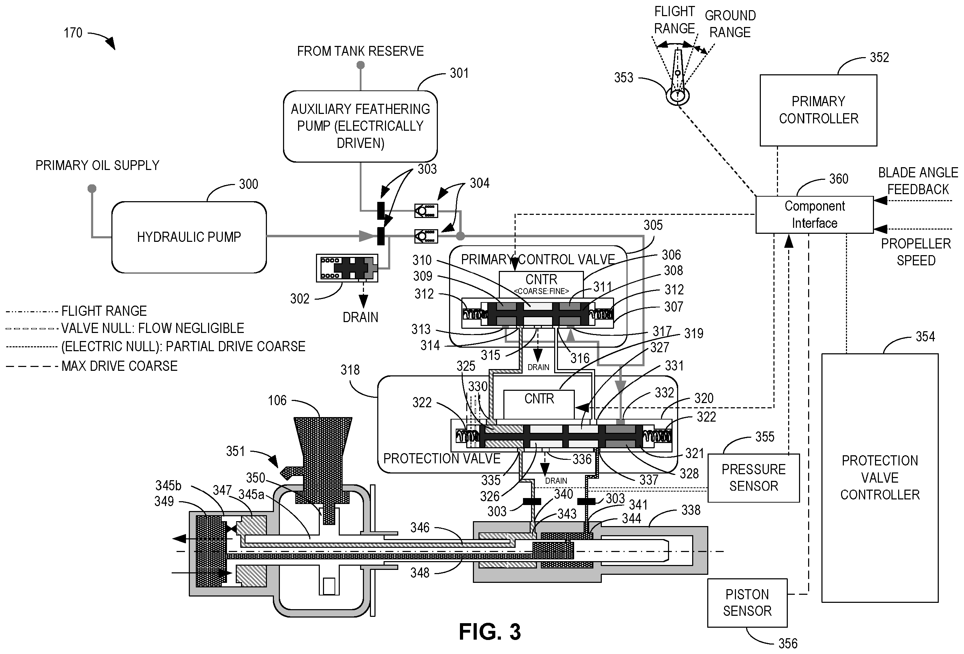

The turbo engine assembly 100 of FIG. 1A includes a pitch control protection system 170. The pitch control protection system 170 is a system that changes the pitch of the blades 106 in response to a trigger (e.g., instructions from a user or another controller), based on a measured pitch being different from an intended pitch, propeller speed, an error, a fault, instruction for a forbidden action (e.g., increase pitch to ground pitch angle when in flight), power or signal loss, etc. The pitch control protection system 170 can automatically adjust the pitch of the blade 106 to reduce air drag automatically after a malfunction or error to reduce the hazard associated with the malfunction or error. The trigger may be one or more signals from a full authority digital engine control (FADEC) 180 and/or any other propeller controller (e.g., such as a propeller engine control (PEC)). In some examples, the propeller primary electronic control function could be housed in different units to provide additional segregation (e.g., for protecting against common mode failures that might result in loss of system function). In some examples, in response to a power outage or error, the FADEC 180 can be powered by a backup power supply and/or battery and output one or more control signals to the pitch control protection system 170 to cause the pitch control protection system 170 to change the pitch of the blades 106. The pitch control protection system 170 includes a hydraulic system with valves to pump hydraulic fluid into a valve assembly that adjusts the pitch of the blades 106. The pitch control protection system 170 is further described below in conjunction with FIGS. 3-6 and 8.

The FADEC 180 is a controller and/or computing system that controls aspects of engine performance. The FADEC 180 can detect and/or determine an error related to power failure, pressure low, propeller pitch control protection system malfunction, and/or any other situations where automatic and/or passive adjustment of the pitch of the blades 106 is needed and/or desired. The FADEC 180 outputs one or more control signals to the pitch control protection system 170 to change the pitch of the blades 106 (e.g., between a fine pitch, a coarse pitch, a ground pitch, and a feathered pitch). In some examples, the FADEC 180 can utilize characteristics of the engine and/or flight and/or user/manufacturer preferences to determine what pitch angle to apply the blades 106. For example, the FADEC 180 can cause automatic feathering of the blades 106 based on a triggering event. For example, the FADEC 180 may trigger a first pitch angle (also referred to as a first pitch) for the blades 106 when an error occurs during takeoff or landing and may use a second pitch angle (also referred to as a second pitch) for the blades 106 when an error occurs during regular flight. Additionally, the FADEC 180 may control the speed of the adjustment of the pitch of the blades 106 based on characteristics of the engine and/or flight and/or user/manufacturer preferences.

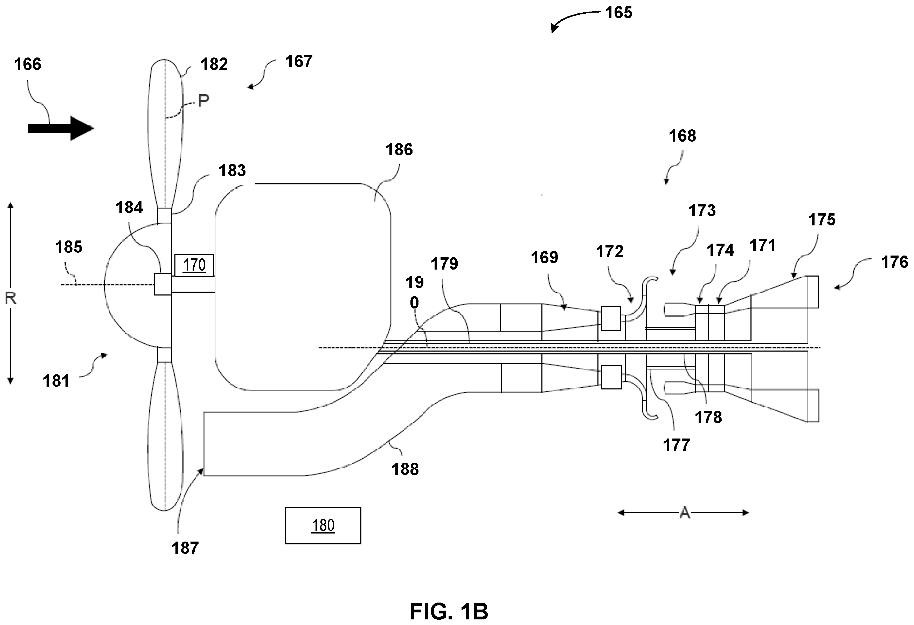

FIG. 1B is a schematic cross-sectional view of a gas turbine engine in accordance with examples disclosed herein. More particularly, for the embodiment of FIG. 1B, the gas turbine engine is a turboprop engine 165. As shown in FIG. 1B, the turboprop engine 165 defines an axial direction A (extending parallel to a longitudinal centerline or central axis 190 provided for reference), a radial direction R, and a circumferential direction C (not shown) disposed about the axial direction A. The turboprop engine 165 generally includes a propeller section 167 and a turbomachine 168 disposed aft of the propeller section 167 from an aircraft perspective, the propeller section 167 being operable with, and driven by, the turbomachine 168. The turboprop engine 165 includes the pitch control protection system 170 and the FADEC 180 of FIG. 1B.

The turbomachine 168 includes, in a serial flow relationship, a booster compressor 169, a high pressure (HP) compressor 172, a combustion section 173, a high pressure (HP) turbine 174, an intermediate pressure (IP) turbine 171, a low pressure (LP) turbine 175, and an exhaust section 176. An air flow path generally extends through the booster compressor 169, the HP compressor 172, the combustion section 173, the HP turbine 174, the IP turbine 171, the LP turbine 175, and the exhaust section 176 which are in fluid communication with each other.

In some examples, the HP turbine 174 can include at least two stages of HP turbine rotor blades. Such a configuration may ensure a sufficient amount of power is provided to the HP compressor 172.

An HP shaft or spool 177 drivingly connects the HP turbine 174 to the HP compressor 172. An IP shaft 178 drivingly connects the IP turbine 171 to the booster compressor 169. An LP shaft or spool 179 drivingly connects the LP turbine 175 to propeller section 167 of the turboprop engine 165. The turbomachine 168 includes a drive turbine drivingly coupled to a drive turbine shaft configured to provide an output torque to, e.g., the propeller section 167 in the embodiment shown. For the depicted example, the drive turbine is the LP turbine 175 and the drive turbine shaft is the LP shaft 179.

For depicted example, the propeller section 167 includes a variable pitch propeller 181 having a plurality of propeller blades 182 coupled to a disk 183 in a spaced apart manner. As depicted, the propeller blades 182 extend outwardly from the disk 183 generally along the radial direction R. Each propeller blade 182 is rotatable relative to the disk 183 about a pitch axis P by virtue of the propeller blades 182 being operatively coupled to a suitable actuation member 184 configured to collectively vary the pitch of the propeller blades 182, e.g., in unison. The propeller blades 182, the disk 183, and the actuation member 184 are together rotatable about a fan centerline 185 by LP shaft 179 across a power gear box 186. The power gear box 186 includes a plurality of gears for stepping down the rotational speed of the LP shaft 179 to a more efficient rotational fan speed and is attached to one or both of a core frame or a fan frame through one or more coupling systems. Additionally, for the embodiment shown, the power gear box 186 is an offset gear box, such that the fan axis 185 is offset from the longitudinal centerline 190 of the turbomachine 168.

During operation of the turboprop engine 165, a volume of air 166 (also referred to as a free stream flow of air prior to the volume of air 126 encountering the propeller 181) passes through the blades 182 of the propeller 181 and is urged toward an inlet 187 of turbomachine 168. More specifically, turboprop engine 165 includes an intake channel 188 that extends from the inlet 187, which is non-axisymmetric with respect to longitudinal centerline 190, to the booster compressor 169, where the channel 188 is axisymmetric with respect to longitudinal centerline 190.

The booster compressor 169 and the HP compressor 172 each include one or more sequential stages of compressor stator vanes, one or more sequential stages of compressor rotor blades, an impeller, or combinations thereof. In particular, the booster compressor 169 is depicted as an axial compressor (having multiple stages of compressor stator vanes and rotor blades) and the HP compressor 172 is depicted as a centrifugal compressor (having an impeller).

Though the illustrated embodiment includes both axial and centrifugal flow compressors, in some forms the turboprop engine 165 can include just an axial flow compressor(s) or centrifugal flow compressor(s).

The HP compressor 172 directs compressed air into the combustion section 173 where the air mixes with fuel. The combustion section 173 includes a combustor which combusts the air/fuel mixture to provide combustion gases. The combustion gases flow through the HP turbine 174, the IP turbine 171, and the LP turbine 175. Each of these HP, IP, and LP turbines 174, 171, 175 includes one or more sequential stages of turbine stator vanes and one or more sequential stages of turbine rotor blades. The turbine rotor blades are coupled to a respective one of the HP shaft 177, the IP shaft 178, or the LP shaft 179 to extract thermal and/or kinetic energy from the combustion gasses flowing therethrough. The energy extraction from the HP turbine 174 supports operation of the HP compressor 172 through the HP shaft 177, the energy extraction from the IP turbine 171 supports operation of the booster compressor 169 through the IP shaft 178, and the energy extraction from the LP turbine 175 supports operation of the propeller section 167 through the LP shaft 179 (across the power gear box 186). Combustion gases exit the turboprop engine 165 through the exhaust section 176.

In some examples, the turbine engine may include any suitable number of compressors, turbines, shafts, etc. For example, as will be appreciated, the HP shaft 177 and the LP shaft 179 may further be coupled to any suitable device for any suitable purpose. For example, the turboprop engine 165 of FIG. 1B may be utilized in aeroderivative applications. Additionally, the turboprop engine 165 may include any other suitable type of combustor, such as a reverse flow combustor.

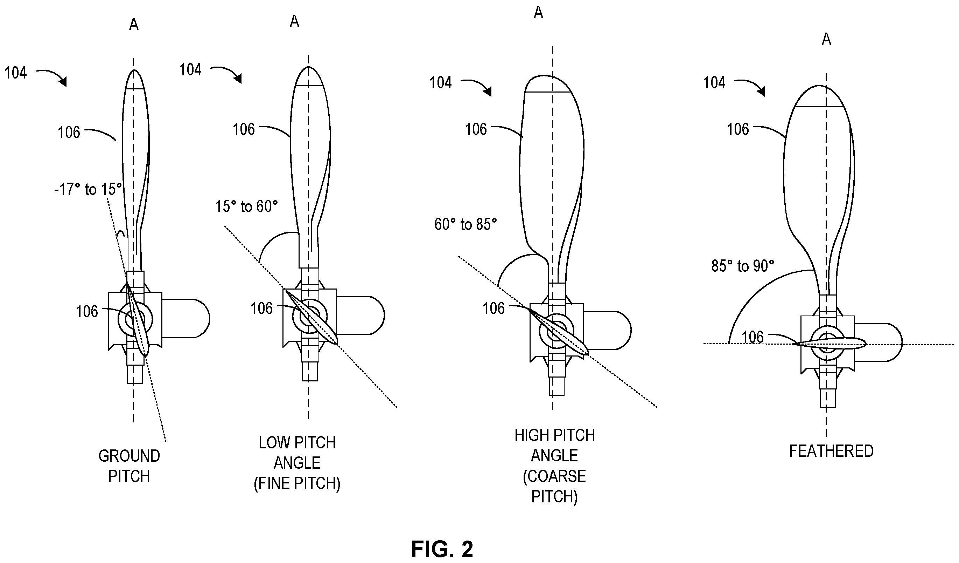

FIG. 2 includes side views of blades 106 of the propeller 104 of the turbo engine assembly 100 of FIG. 1A or the turboprop engine assembly 165 of FIG. 1B in four different pitch angles and/or positions (e.g., a ground pitch, fine pitch, coarse pitch, and feathered). In the example of FIG. 2, a ground angle of the blades 106, also referred to as ground pitch, is an angle that is less than a first threshold angle (e.g., less than 15 degrees) to the plane of rotation (e.g., corresponding to line A). A low pitch angle of the blades 106, also referred to as fine pitch, is an angle that is less than a second threshold (e.g., between 15 and 60 degrees) to the plane of rotation (e.g., corresponding to line A). The pitch with the low pitch angle corresponds to a first amount of drag (e.g., high drag). A high pitch angle of the blades 106, also referred to as coarse pitch, is an angle that is greater than the second threshold but less than a third threshold (e.g., between 60 and 85 degrees) to the plane of rotation. The pitch with the high pitch angle corresponds to a second amount of drag (e.g., medium drag). The feathered angle of the blades 106, also referred to as feathered pitch, is an angle that is above a threshold (e.g., 85-90 degrees to the plane of rotation). The pitch with the feathered angle corresponds to a third amount of drag (e.g., low drag). As described above, the pitch control protection system 170 can, based on a trigger, adjust the pitch to any angle. The amount of pitch control and/or speed of pitch control may be based on user/manufacturer preference and/or based on characteristics of the flight and/or turbo engine assembly 100. FIG. 2 illustrates example angles for different pitches corresponding to the blades 106 of turbo engine assembly 100 of FIG. 1A or the blades 182 of the turboprop engine assembly 165 of FIG. 1B. However, the angles may be different for different turbo propeller engines. For example, a turboprop engine assembly may define a ground pitch as a pitch between 12 and -17 degrees. Additionally, the angles may be different for propeller blades with different radius size.

FIG. 3 illustrates an example implementation of the pitch control protection system 170 of FIGS. 1A and/or 1B. The pitch control protection system 170 includes a hydraulic pump 300, an auxiliary hydraulic pump 301, a pressure relief valve 302, strainers 303, no return valves 304, and a primary control valve assembly 305 (also referred to as a servo valve or an electrohydraulic servo valve (EHSV)). The primary control valve assembly 305 includes a valve spool position controller 306; a primary sleeve 307; a valve spool 308; passages 309, 310, 311 (also referred to as a first passage 309, a second passage 310, and a third passage 311); springs 312; inputs 313, 317(also referred to as a first input 313 and a second input 317); and outputs 314, 315, 316 (also referred to as a first output 314, a second output 315, and a third output 316). The pitch control protection system 170 further includes a protection valve assembly 318 (also referred to as a servo valve or an electrohydraulic servo valve (EHSV)). The protection valve assembly 318 includes a valve spool position controller 319; a sleeve 320; a valve spool 321; springs 322; passages 325, 326, 327, 328 (also referred to as a first passage 325, a second passage 326, a third passage 327, and a fourth passage 328); ports (e.g., inputs and/or outputs) 330, 331, 335, 337 (also referred to as a first port 330, a second port 331, a third port 335, and a fourth port 337); an input 332; and an output 336. The pitch control protection system 170 further includes a hydraulic fluid transfer unit 338. The hydraulic fluid transfer unit 338 is a dual acting hydraulic pitch actuator. The hydraulic fluid transfer unit 338 includes ports (e.g., inputs and/or outputs) 340, 341(also referred to as a first port 340 and a second portion 341); galleries 343, 344(also referred to as a first gallery 343 and a second gallery 344); an example beta tube 345a, which includes a piston 345b and connections 346, 348(also referred to as a fine pitch chamber connection 346 and a coarse pitch chamber connection 348); chambers 347, 349 of the propeller pitch change actuator on either side of the piston 345b (also referred to as a fine pitch chamber 347 and a coarse pitch chamber 349); a propeller crosshead 350; a counterweight 351; a primary controller 352; a protection valve controller 354; one or more pressure sensors 355, and a piston sensor 356. As used herein, inputs may be referred to as ports, inputs, inlets, input connections, inlet connection, input terminals, inlet terminals, etc. As used herein, outputs may be referred to as ports, outputs, outlets, output connections, outlet connection, output terminals, outlet terminals, etc. Components that are connected via a solid line are connected via a connection, a tube, a hose, a pipe, and/or other device that can transport fluid. Components that are connected via a dashed line are connected via an electrical connection (e.g., a wired connection, such as a wire, an etch, etc. or a wireless connection). In FIG. 3, the valves 302, 305, 318, and the hydraulic fluid transfer unit 338 are illustrated as cross sections of the respective components. Although FIG. 3 is described in conjunction with the blade 106 of the turbo engine assembly 100 of FIG. 1A, examples disclosed herein may be implemented in conjunction with other types of turbo engine assemblies (e.g., the blade 182 of the turboprop engine 165 of FIG. 1B), turbo propeller assemblies, hybrid engine assemblies, hybrid turboprop propeller assemblies, electric propulsion assemblies, etc. As used herein, a hybrid assembly is an assembly with a propeller drive by an electric motor in a conventional gas turbine engine.

The hydraulic pump 300 of FIG. 3 is a conveyer of hydraulic power that pumps a hydraulic fluid. The hydraulic pump 300 acts as a pressure vessel to cause hydraulic fluid to flow (e.g., to be pumped) into the primary control valve assembly 305 and/or the protection valve assembly 318. The hydraulic fluid may be an oil-based fluid, a silicone-based fluid, a synthetic hydrocarbon-based fluid, and/or other type of hydraulic fluid.

The auxiliary hydraulic pump 301 of FIG. 3 is a conveyer of hydraulic power that pumps a hydraulic fluid when the hydraulic fluid from the hydraulic pump 300 is insufficient (e.g., due to a loss of primary oil supply). One or both of the hydraulic pumps 300, 301 cause(s) hydraulic fluid to flow (e.g., to be pumped) into the primary control valve assembly 305 and/or the protection valve assembly 318. The hydraulic fluid may be an oil-based fluid, a silicone-based fluid, a synthetic hydrocarbon-based fluid, and/or another type of hydraulic fluid.

The pressure relief valve 302 of FIG. 3 keeps the pressure of the hydraulic fluid from the hydraulic pump 300 below a threshold level (e.g., 1100 pounds per square inch (psi), etc.) by draining some of the hydraulic fluid toward a drain when the hydraulic fluid is above the threshold level. The pressure relief valve 302 reduces the pressure of the hydraulic fluid to prevent pressure-induced damage when causing the hydraulic fluid to flow into other components of the pitch control protection system 170. In some examples, the pressure relief valve 302 is implemented within the hydraulic pump 300.

The strainers 303 of FIG. 3 strain the hydraulic fluid to block contaminants in the hydraulic fluid that may damage or jam the valves 304, 305, 318. Although FIG. 3 has four strainers 303, there may be any number of strainers. The no return valves (NRVs) 304 are valves that prevent hydraulic fluid from returning back to the hydraulic pumps 300, 301.

The primary control valve assembly 305 of FIG. 3 allows or prevents hydraulic fluid from the hydraulic pumps 300, 301 into the coarse pitch chamber 349 and the fine pitch chamber 347 via one or more of the connections 346, 348 of the beta tube 345a based on a position of the valve spool 308. The primary control valve assembly 305 includes the valve spool position controller 306. The valve spool position controller 306 obtains an electrical signal (e.g., a current) from the primary controller 352. The valve spool position controller 306 moves the valve spool 308 based on the electrical signal (e.g., based on the amount of current). For example, the valve spool position controller 306 moves the valve spool 308 to a first position based on obtaining a first current and moves the valve spool 308 to a second position based on a second current. In some examples, the valve spool position controller 306 may be a direct drive valve (also referred to as a proportional valve). In such examples, the valve spool 308 is moved by an electric means (e.g., a linear motor, a stepper type motor, etc. through a gear drive with electronic feedback). As further described below, the primary controller 352 generates the signal based on instructions from a pilot and/or based on instructions from one or more of the FADEC 180 of FIGS. 1A and/or 1B, a separate controller (e.g., a propeller electronic controller), a separate control box, etc.

The primary sleeve 307 of FIG. 3 is a cylindrical valve that includes the valve spool 308. The valve spool 308 is a cylindrical valve spool that fits within the primary sleeve 307 and includes solid portions and open portions (also referred to as open areas). The open portions of the valve spool 308 make up the passages 309, 310, 311. The passages 309, 310, 311 are separated so that any fluid in one passage cannot directly flow into another passage within the primary sleeve 307. The valve spool 308 can move within a cavity of the primary sleeve 307 between the springs 312. In some positions (e.g., locations), one or more solid portions of the valve spool 308 can block or plug one or more of the inputs 313, 317 or outputs 314, 315, 316. In other positions, one or more of the solid portions of the valve spool 308 do not block or plug one or more of the inputs 313, 317 or outputs 314, 315, 316 allowing the hydraulic fluid to flow into and/or out of one or more of the passages 309, 310, 311.

The first input 313 of the primary sleeve 307 is connected to the hydraulic pumps 300, 301 (e.g., via the strainers 303 and the NRVs 304), the second input 317, and the input 332 of the sleeve 320 of the protection valve assembly 318. The first output 314 is connected to the first port 330 of the sleeve 320. The second output 315 is connected to a drain. The third output 316 is connected to the second port 331 of the sleeve 320. The second input 317 is connected to the hydraulic pumps 300, 301 (e.g., via the strainers 303 and the NRVs 304), the first input 313, and the input 332 of the sleeve 320.

When the valve spool 308 is in the position of FIG. 3, the first and third outputs 314, 316 are blocked by the valve spool 308. Accordingly, the primary sleeve 307 does not output hydraulic fluid to either the fine pitch chamber 347 or the coarse pitch chamber 349.

When the valve spool 308 is moved forward in the orientation of FIG. 3, the first output 314 of the primary sleeve 307 opens into the second passage 310 and the second passage 310 opens to a drain via the second output 315 of the primary sleeve 307. Thus, no hydraulic fluid is pumped from the first output 314 to the sleeve 320. As described above, the term "forward" refers to a direction along the centerline axis 108 in the direction of movement of turbo engine assembly 100, such as to the left in FIG. 3, while the term "rearward" refers to a direction along the centerline axis 108 in the opposite direction, such as to the right in FIG. 3. Additionally, when the valve spool 308 is moved forward in the orientation of FIG. 3, the second input 317 of the primary sleeve 307 opens into the third passage 311 and the third passage 311 opens into the second port 331 of the sleeve 320 via the third output 316 of the sleeve 320. Thus, the hydraulic fluid from the hydraulic pump(s) 300, 301 is pumped into the second port 331 of the sleeve 320 via the second input 317 of the primary sleeve 307 and the third passage 311.

When the valve spool 308 is moved rearward in the orientation of FIG. 3, the third output 316 of the primary sleeve 307 opens into the second passage 310 and the second passage 310 opens to a drain via the third output 316 of the primary sleeve 307. Thus, no hydraulic fluid is pumped from the third output 316 to the sleeve 320. Additionally, when the valve spool 308 is moved rearward in the orientation of FIG. 3, the first input 313 of the primary sleeve 307 opens into the first passage 309 and the first passage 309 opens into the first port 330 of the sleeve 320 via the first output 314 of the primary sleeve 307. Thus, the hydraulic fluid from the hydraulic pump(s) 300, 301 is pumped into the first port 330 of the sleeve 320 via the first input 313 of the primary sleeve 307 and the first passage 309.

The springs 312 of FIG. 3 are structured to position the valve spool 308 in a particular position when the valve spool position controller 306 does not obtain a signal. In this manner, when there is a loss of signal or power, the springs 312 causes the valve spool 308 to move to a pre-selected position. In the example of FIG. 3, the springs 312 are structured to move the valve spool 308 to the position illustrated in FIG. 3, where the valve spool 308 plugs the first and third outputs 314, 316. In some examples, one or more of the springs 312 may be removed. For example, the spring 312 on the left (with regards to the orientation of FIG. 3) of the sleeve 307 may be removed. Removing the spring 312 on the left provides greater chip-shearing capability in the desired direction. If there is no oil pressure in the first stage of the valve assembly 305, the spring 312 on the right (with regards to the orientation of FIG. 3) of the sleeve 307 ensures the spool 308 moves to connect fine pitch oil connected to drain, thereby allowing the counterweights 351 to drive the blade 106 coarse, as a failsafe.

The protection valve assembly 318 of FIG. 3 allows or prevents hydraulic fluid from the primary sleeve 307 and/or the hydraulic pumps 300, 301 into the coarse pitch chamber 349 and the fine pitch chamber 347 of the beta tube 345a based on a position of the valve spool 321. The primary control valve assembly 305 includes the valve spool position controller 319 to obtain an electrical signal (e.g., a current) from the protection valve controller 354 via component interface 360. The valve spool position controller 319 moves the valve spool 321 based on the electrical signal (e.g., based on the amount of current). For example, the valve spool position controller 319 moves the valve spool 321 to a first position based on obtaining a first current, moves the valve spool 321 to a second position based on a second current, etc. In some examples, the valve spool position controller 319 may be a direct drive valve (also referred to as a proportional valve). In such examples, the valve spool 321 is moved by an electric means (e.g., a linear motor, a stepper type motor, etc. through a gear drive with electronic feedback). As further described below, the protection valve controller 354 generates the signal based on various data (e.g., propeller speed, pressure sensor data, blade angle feedback, information from the primary controller 352, etc.).

The valve spool 321 of FIG. 3 is a cylindrical valve spool that fits within the cylindrical sleeve 320 and includes solid portions and open portions. The open portions of the valve spool 321 define (e.g., make up, correspond to, etc.) the passages 325, 326, 327, 328. The passages 325, 326, 327, 328 are separated so that any fluid in one passage cannot directly flow into another passage within the sleeve 320. The valve spool 321 can move within a cavity of the sleeve 320 between the springs 322. In some positions (e.g., locations), one or more solid portions of the valve spool 321 can block or plug one or more of the ports 330, 331, 335, 337, the input 332, or the output 336. In other positions, one or more of the solid portions of the valve spool 321 do not block or plug one or more of the ports 330, 331, 335, 337, the input 332, or the output 336 allowing the hydraulic fluid to flow into and/or out of one or more of the passages 325, 326, 327, 328. In some examples, one or more of the ports 330, 331, 335, 337 can be bi-directional (e.g., to allow hydraulic fluid to pass through the protection valve assembly 318 in either direction).

The first port 330 of FIG. 3 of the sleeve 320 is connected to the first output 314 of the primary sleeve 307. The second port 331 is connected to the third output 316 of the primary sleeve 307. The input 332 is connected to the hydraulic pumps 300, 301 (e.g., via the strainers 303, and the NRV 304 and the first input 313 and the second input 317 of the primary sleeve 307. The third port 335 is connected to the first port 340 of the hydraulic fluid transfer unit 338. The output 336 is connected to the drain. The fourth port 337 is connected to the second port 341 of the hydraulic fluid transfer unit 338.

The valve spool position controller 319 of FIG. 3 can move the valve spool 321 into at least four different positions that correspond to four different actions based on a signal from the protection valve controller 354 via the component interface 360. For example, the valve spool 321 can be moved to a maximum drive coarse position, a partial drive coarse position, a valve null position, and a flight/ground range position. The maximum drive coarse position corresponds to an automatic flow of hydraulic fluid at full pressure to the coarse pitch chamber 349 of the valve spool assembly to cause the blade 106 to move to a coarse and/or feathered pitch angle at a maximum rate. The partial drive coarse position corresponds to an automatic flow of hydraulic fluid at partial pressure to the coarse pitch chamber 349 of the valve spool assembly to cause the blade 106 to move to a coarse and/or feathered pitch angle at a rate less than maximum. The valve null position corresponds to preventing hydraulic fluid from flowing to either the coarse pitch chamber 349 or the fine pitch chamber 347 maintaining the pitch of the blade 106. The flight/ground range position corresponds to control of the pitch angle based on the hydraulic fluid output by the primary sleeve 307 and/or control of the pitch angle to the ground range. The ground range position corresponds to pumping hydraulic fluid into the fine pitch chamber 347 to cause the blade 106 to move to a ground pitch angle. In some examples, the ground pitch angle is restricted when the aircraft is in flight. Accordingly, as further described below, the protection valve controller 354 can monitor the position of the beta tube 345a of the hydraulic fluid transfer unit 338 to prevent the beta tube 345a from moving to a position that corresponds to a ground pitch angle of the blade 106. The example of FIG. 3 is described in conjunction with the flight/ground range position. However, each position is illustrated in one of FIGS. 3-6.

In FIG. 3, the valve spool 321 is in the flight/ground range position. In the flight/ground range position, the first port 330 opens to the first passage 325 and the third passage opens to the third port 335. Thus, hydraulic fluid from the first port 330 is pumped out of the third port 335. The second port 331 opens to the third passage 327 and the third passage 327 opens to the fourth port 337. Thus, hydraulic fluid from the second port 331 is pumped out of the fourth port 337. The input 332 opens to the fourth passage 328 (which does not open to an output). The second passage 326 opens to the output 336 and the output 336 opens to the drain. Thus, any fluid in the second passage 326 is drained to the drain. Accordingly, in the flight/ground range position, hydraulic fluid from either the first output 314 and/or third output 316 of the primary sleeve 307 is pumped into the hydraulic fluid transfer unit 338 through the first passage 325 and/or the third passage 327 of the sleeve 320.

The springs 322 of FIG. 3 are structured to position the valve spool 321 in the partial drive coarse position when the valve spool position controller 319 does not obtain a signal. In this manner, when there is a loss of signal or power, the springs 322 cause the valve spool 321 to move to the partial drive coarse position. Because a coarse pitch angle is safer than a fine pitch angle in flight, the springs 322 can be structured to position the valve spool 321 into the partial drive coarse position. In some examples, one or more of the springs 322 may be removed. For example, the spring 322 on the left (with regards to the orientation of FIG. 3) of the sleeve 320 may be removed. Removing the spring on the left provides greater chip-shearing capability in the desired direction. If there is no oil pressure in the first stage of the valve assembly 318, the spring 322 on the right (with regards to the orientation of FIG. 3) of the sleeve 320 ensures the spool 321 moves to connect fine pitch oil connected to drain, thereby allowing the counterweights 351 to drive the blade 106 coarse, as a failsafe.

Although the example of FIGS. 3-7 provide a particular structure for implementing the valve assembly 318, there may be other ways to implement the valve assembly 318 to perform the same and/or substantially similar functionality.

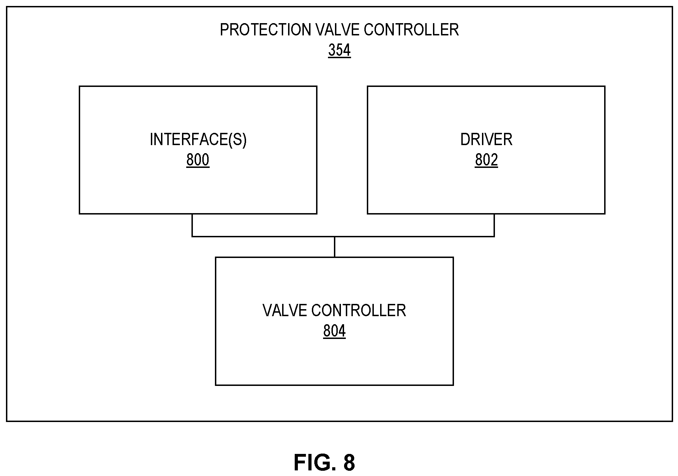

The hydraulic fluid transfer unit 338 of FIG. 8 houses the beta tube 345a and components structured to move the beta tube 345a into different positions. In some examples, the hydraulic fluid transfer unit 338 may be combined with one or more components of the pitch control protection system 170. As further described below, as the beta tube 345a moves, the pitch angle of the blade 106 changes. The hydraulic fluid transfer unit 338 includes a first port 340, and a second port 341. The first port 340 is connected to the third port 335 of the sleeve 320 and the first gallery 343. The second port 341 is connected to the fourth port 337 of the sleeve 320 and the second gallery 344. The galleries 343, 344 may be a 360-degree open space that connects the ports 340, 341 to the chambers 347, 349 via one or more of the fine pitch chamber connection 346 or the coarse pitch chamber connection 348. Accordingly, the galleries 343, 344 convey hydraulic fluid from one location to another. For example, hydraulic fluid pumped into the first gallery 343 can be pumped into the fine pitch chamber 347 when the beta tube 345a is in a position where the first gallery 343 opens to the fine pitch chamber connection 346. Additionally, hydraulic fluid pumped into the second gallery 344 can be pumped into the coarse pitch chamber 349 when the beta tube 345a is in a position where the second gallery 344 opens to the coarse pitch chamber connection 348. When the beta tube 345a rotates, hydraulic fluid can still be pumped in, because regardless of the orientation of the connections 346, 348, the 360-degree galleries 343, 344 can open up to the connections 346, 348.

The connections 346, 348 of FIG. 3 are tubes, pipes, hoses, and/or openings within the beta tube 345a that can pump obtained hydraulic fluid from the sleeve 320 into one or more of the fine pitch chamber 347 and the coarse pitch chamber 349. When hydraulic fluid is pumped into the coarse pitch chamber 349, the beta tube 345a moves rearward in the orientation of FIG. 3 causing the blade 106 to move to a coarse pitch angle. When the hydraulic fluid is pumped into the fine pitch chamber 347, the beta tube 345a moves forward in the orientation of FIG. 3 causing the blade 106 to move to a fine pitch angle. The coarse pitch chamber 349 and the fine pitch chamber 347 may include a piston bleed structure to bleed out hydraulic fluid that has been pumped into the respective chambers 347, 349. The beta tube 345a includes the piston 345b to separate the chambers 347, 349. When hydraulic fluid is pumped into the fine pitch chamber 347, the piston 345b is moved forward and hydraulic fluid in the coarse pitch chamber 349 is pumped out of one or more of the drain outputs 315, 336 via the primary control valve 305 and/or the protection valve 318 (e.g., depending on the positions of the valve spools 308, 321). When hydraulic fluid is pumped into the coarse pitch chamber 349, the piston 345b is moved rearward and hydraulic fluid in the fine pitch chamber 347 is pumped out of one or more of the drain outputs 315, 336 via the primary control valve 305 and/or the protection valve 318 (e.g., depending on the positions of the valve spools 308, 321).

The beta tube 345a of FIG. 3 includes a propeller crosshead 350 that transfers the lateral movement (e.g., forward and rearward in the orientation of FIG. 3) into rotational movement to adjust the pitch of the blade 106. The yoke arrangement of the propeller crosshead 350 locates the operating pin on the base of each propeller blade 106. The pin may be offset from the centerline of the propeller blade 106 such that axial movement of the pitch beta tube 345a results in rotation of the blade 106.

The blade 106 of FIG. 3 includes the counterweight 351. The counterweight 351 causes the blade 106 to naturally reduce pitch when a load is present on the blade 106. The counterweight 351 causes the blade 106 to naturally position to a higher blade angle. As further described below, one or more of the pressure sensor(s) 355 can measure pressure at the one or more of the third or fourth ports 335, 337 of the protection valve assembly 318 so that the protection valve controller 354 can determine, based on the pressure measurement, when there is any friction in the blade 106 that prevents the counterweight 351 from naturally reducing pitch of the blade 106 and/or determine that the counterweight 351 has been compromised.

The primary controller 352 of FIG. 3 is a pitch controller that outputs a control signal to the valve spool position controller 306 via the component interface 360 based on instructions from a pilot and/or autopilot instructions. For example, when a pilot engages the power lever 353, the primary controller 352 can determine a pitch angle that corresponds to the control of the power lever 353 and adjust the pitch of the blade 106 by sending a signal (e.g., a current) to the valve spool position controller 306. The primary controller 352 can execute control algorithm(s) to determine an amount to change the pitch angle at a given time. For example, in flight, the propeller controller 352 varies pitch to maintain propeller speed. Varying the pitch in flight changes the propeller torque absorbed. If the propeller torque is greater than the engine torque, the propeller speed will be reduced. If the propeller torque is less than the engine torque, the propeller speed will increase. The control algorithm(s) executed by the primary controller 352 provide for stability with respect to the propeller speed. When the propeller is in the ground range, the control algorithm sets the pitch as a function of the position of the power lever 353 while the engine maintains speed. As described above, the valve spool position controller 306 controls the position of the valve spool 308 in the primary sleeve 307 based on the signal, which causes hydraulic fluid to be pumped into one of the fine pitch chamber 347 or the coarse pitch chamber 349 to adjust the pitch of the blade 106. The primary controller 352 may output the desired pitch position, flight mode (e.g., grounded, take-off, landing, cruise altitude, etc.), and/or other information to the protection valve controller 354 via the component interface 360. In some examples, the primary controller 352 may be in communication with and/or implemented within the FADEC 180 of FIGS. 1A and/or 1B.

The protection valve controller 354 of FIG. 3 outputs control signals to the protection valve assembly 318 via the component interface 360 to facilitate and/or override operation of the primary sleeve 307. For example, during default (e.g., normal) operation, the protection valve controller 354 outputs a signal to the valve spool position controller 319 via the component interface 360 to cause the valve spool 321 of the sleeve 320 to be positioned in the flight range location. As described above, when the valve spool 321 is in the flight range location, the position of the valve spool 308 of the primary sleeve 307 controls the position of the beta tube 345a by pumping hydraulic fluid into the fine pitch chamber 347 and/or the coarse pitch chamber 349. The protection valve controller 354 also monitors the propeller speed, blade angle feedback, pressure information, and/or information from the primary controller 352 to determine whether to override the control of the primary control valve assembly 305 and/or otherwise control the pitch of the blade 106. For example, when the propeller speed is above one or more thresholds, the protection valve controller 354 can adjust the position of the valve spool 321 to cause the blade 106 to adjust the tilt to decrease the pitch angle to a coarser pitch angle by pumping hydraulic fluid into the coarse pitch chamber 349. Additionally, when blade pitch angle feedback indicates that the blade 106 is not approaching the intended pitch angle, the protection valve controller 354 can adjust the position of the valve spool 321 to attempt to move the blade 106 to the intended pitch angle.

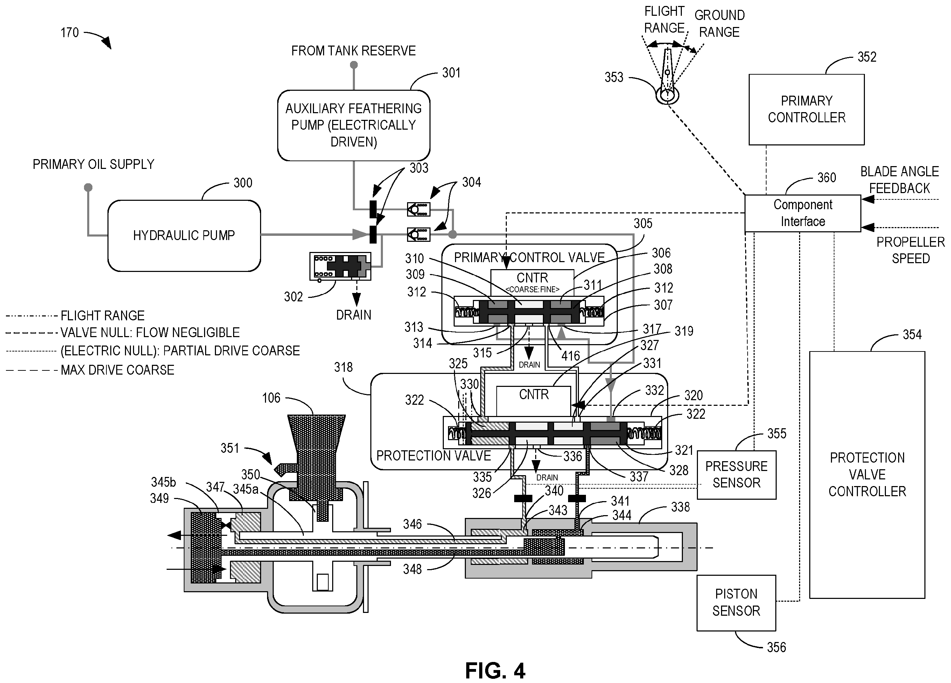

Additionally, the protection valve controller 354 can prevent the blade 106 from reaching a pitch angle below a threshold pitch angle (e.g., a ground pitch) unless the aircraft is grounded. For example, the protection valve controller 354 can determine the position of the beta tube 345a and prevent the beta tube 345a from moving to a position that corresponds to a ground pitch angle unless the aircraft is grounded. The protection valve controller 354 can determine the position of the beta tube 345a based on information from the piston sensor 356. The piston sensor 356 can be one or more sensors that can sense the position of the beta tube 345a and/or the pitch angle of the blade 106. When the protection valve controller 354 determines that the position of the beta tube 345a and/or the pitch angle of the blade 106 does not satisfy a threshold (e.g., the pitch angle corresponds to a ground pitch angle during flight and, thus, is below a threshold pitch angle), the protection valve controller 354 can output a signal to the valve spool position controller 319 to position the valve spool 321 of the sleeve 320 into the null position or the coarse position(s) of FIGS. 4-6. As further described below, the null position of the valve spool 321 prevents the hydraulic fluid from reaching the first gallery 343 preventing the beta tube 345a from further moving to a position corresponding to a ground pitch angle of the blade 106. The coarse position (partial drive coarse or maximum drive coarse) of the valve spool 321 causes the hydraulic fluid to be pumped into the coarse pitch chamber 349 and the second gallery 344 to move the valve spool 321 into a position corresponding to a coarse pitch angle, which provides a coarse-seeking force on the piston 345b.

In some examples, the protection valve controller 354, via the component interface 360, determines and/or alerts the pilot or another component to an issue associated with the pressure measured by the pressure sensor(s) 355. In some examples, the pressure sensor(s) 355 can measure a pressure at the third port 335 that can be used to determine a valve failure, excess friction at the propeller crosshead 350, and/or an issue with the counterweight 351. In some examples, the pressure sensor(s) 355 can measure a pressure at the fourth port 337. In such examples, the protection valve controller 354 can determine a delta (e.g., difference) between the pressure at the third port 335 and the pressure at the fourth port 337. The protection valve controller 354 can determine in flight system friction based on the delta and take appropriate action based on the flight system friction. The protection valve controller 354 may monitor the pressure as the pitch of the blade 106 is reduced to determine an amount of pressure needed to overcome friction. When the amount of pressure needed to overcome friction changes, the protection valve controller 354 can flag, via the component interface 360, the potential issue to the pilot, a mechanic, etc. For example, because the pressure at the third port 335 is supposed to be zero when the aircraft is in flight, the protection valve controller 354 can generate an alert when the pressure at the third port 335 is not zero at any time during flight. The protection valve controller 354 is further described below in conjunction with FIG. 8.

The component interface 360 of FIG. 3 may include one or more interfaces to transmit and/or obtain electrical signal to/from one or more of the controllers 306, 319, 352, 354, the level 353, the sensors 355, 356, and/or any other aircraft components have can provide or obtain an electrical signal. The component interface 360 allows independent control functionality between the primary controller 352 and the protection valve controller 354. Accordingly, if a failure occurs at one of the primary controller 352 or the protection valve controller 354, the other controller can continue operation.

FIG. 4 illustrates an example implementation of the pitch control protection system 170 of FIGS. 1A and 1B when the valve spool 321 of the sleeve 320 is in a valve null position.

In the valve null position of FIG. 4, the first port 330 opens to the first passage 325 (which does not open to an output). The second port 331 opens to the third passage 327 (which does not open to an output). The input 332 opens to the fourth passage 328 (which does not open to an output). The second passage 326 opens to the output 336 and the output 336 opens to a drain. Thus, any fluid in the second passage 326 is drained to the drain. Additionally, in the valve null position, the third port 335 and the fourth port 337 are plugged and/or blocked by the valve spool 321. Accordingly, no hydraulic fluid from the sleeve 320 flows into the hydraulic fluid transfer unit 338. For example, the sleeve 320 blocks the fluid output of the primary sleeve 307 from the hydraulic fluid transfer unit 338. Thus, in the valve null position, hydraulic fluid is not used to adjust the pitch of the blade 106 (e.g., pitch angle is maintained and/or controlled by the counterweight 351, where the counterweight provides a force on the piston 345b in a direction to increase pitch so that the pitch angle does not move below a threshold pitch angle).

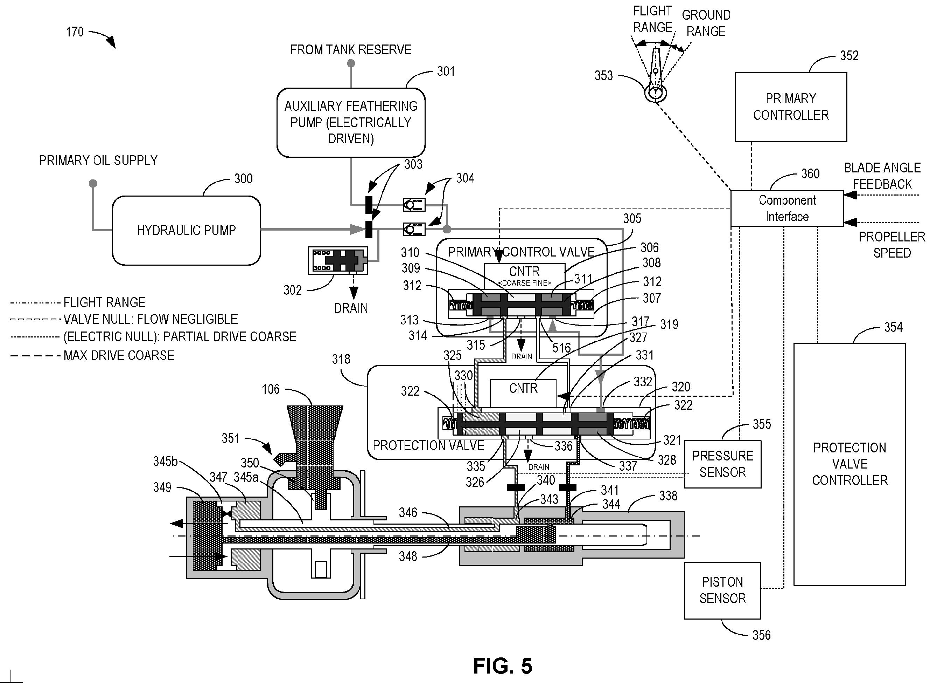

FIG. 5 illustrates an example implementation of the pitch control protection system 170 of FIGS. 1A and 1B when the valve spool 321 of the sleeve 320 is in a partial drive coarse position.

In the partial drive coarse position of FIG. 5, the first port 330 opens to the first passage 325 (which does not open to an output). The second port 331 opens to the third passage 327 (which does not open to an output). The input 332 opens to the fourth passage 328 and the fourth passage 328 partially opens to the fourth port 337. For example, the valve spool 321 partially blocks the fourth port 337 limiting the amount of hydraulic fluid that is pumped into the hydraulic fluid transfer unit 338. The hydraulic fluid from at least one of the hydraulic pumps 300, 301 is pumped into the second gallery 344 of the hydraulic fluid) transfer unit 338 via the second port 341 by bypassing (e.g., without going through the primary sleeve 307. Accordingly, in the partial drive coarse position of FIG. 5, the protection valve assembly 318 overrides the pitch control of the primary control valve assembly 305 by blocking the fluid output of the primary sleeve 307. Additionally, in the partial drive coarse position of FIG. 5, the second passage 326 opens to the output 336, which opens to a drain. Thus, any fluid in the second passage 326 and/or from the third port 335 is drained to the drain.

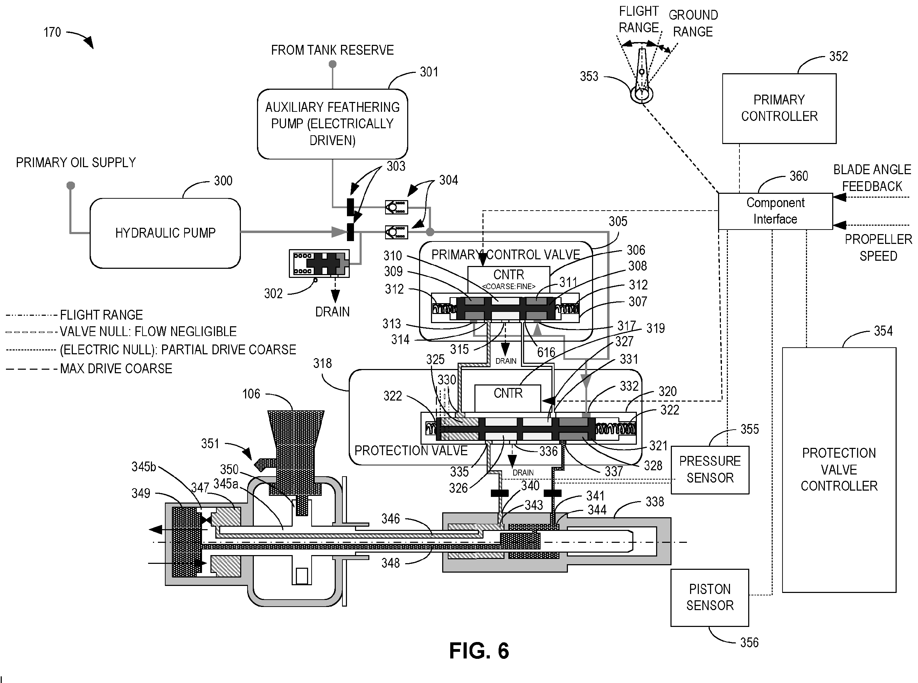

FIG. 6 illustrates an example implementation of the pitch control protection system 170 of FIGS. 1A and 1B when the valve spool 321 of the sleeve 320 is in a maximum drive coarse position.

In the maximum drive coarse position of FIG. 6, the first port 330 opens to the first passage 325 (which does not open to an output). The second port 331 is blocked by the valve spool 321 or can open to the third passage 327 (which does not open to an output). The input 332 opens to the fourth passage 328 and the fourth passage 328 which fully opens to the fourth port 337. For example, the valve spool 321 does not block the fourth port 337 allowing maximum hydraulic flow into the hydraulic fluid transfer unit 338. The hydraulic fluid from at least one of the hydraulic pumps 300, 301 is pumped into the second gallery 344 of the hydraulic fluid transfer unit 338 via the second port 341 without going through the primary sleeve 307. Accordingly, in the maximum drive coarse position of FIG. 6, the protection valve assembly 318 overrides the pitch control of the primary control valve assembly 305 by blocking the fluid output by the primary sleeve 307. Additionally, in the maximum drive coarse position of FIG. 6, the third port 335 opens to the second passage 326 and the second passage 326 opens to the output 336, which opens to the drain. Thus, any fluid from the fine pitch chamber 347 can be drained to the drain via the first gallery 343, the third port 335, and the second output 336.

In the disclosed examples, the valve spool 308 of the primary control valve assembly 305 can move to cause hydraulic fluid to be output via the first and third outputs 314, 316 to enable adjustments to propeller pitch. In some examples, the valve spool 308 and the valve spool 321 of the protection valve assembly 318 can move at the same time or substantially the same time. For example, while the primary control valve assembly 305 operates to control pitch, the protection valve controller 354 can override the actions of the primary control valve assembly 305 if the protection valve controller 354 detects, for example, a primary system malfunction.

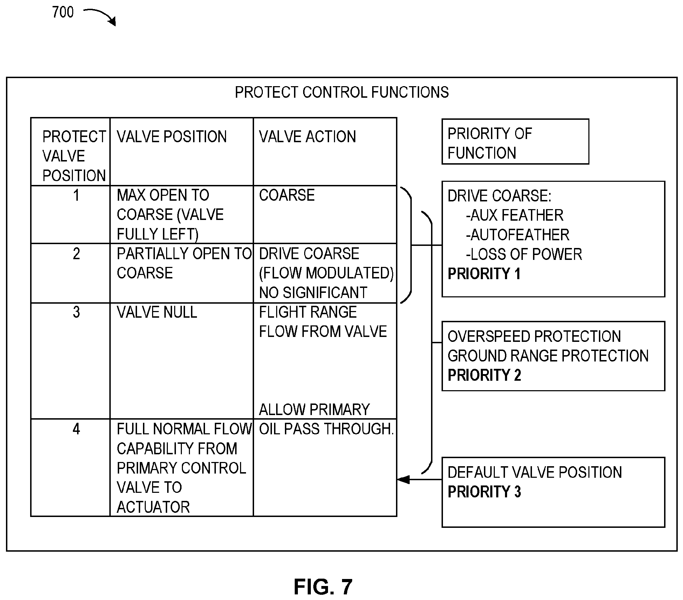

FIG. 7 illustrates the example protect control functions 700 that can be implemented by the protection valve controller 354 to control the position of the valve spool 321 in the protection valve assembly 318 of FIGS. 3-6. FIG. 7 includes four functions 700 that correspond to the valve spool positions of FIGS. 3-6 namely, a maximum drive coarse position, a partial drive coarse position, a valve null position, and a flight/ground range position. For example, protect valve position 1 corresponds to placing the valve spool 321 of the sleeve 320 into the maximum drive coarse position illustrated in FIG. 6. Protect valve position 2 corresponds to placing the valve spool 321 of the sleeve 320 into the partial drive coarse position illustrated in FIG. 5. Protect valve position 3 corresponds to placing the valve spool 321 of the sleeve 320 into the valve null position illustrated in FIG. 4. Protect valve position 4 corresponds to placing the valve spool 321 of the sleeve 320 into the flight/ground range position illustrated in FIG. 3. As described above, in protect valve position 4, the protection valve controller 354 monitors the position of the beta tube 345a of the hydraulic fluid transfer unit 338 and/or the blade 106. When the monitored position(s) fail to satisfy a threshold (e.g., the pitch angle is below a threshold pitch angle due to the pitch angle corresponding to a ground pitch angle) and the aircraft is in flight (e.g., not grounded), the protection valve controller 354 automatically positions the valve spool 321 of the sleeve 320 to the null position or drive coarse position(s) of FIGS. 4-6 to prevent the valve spool 321 from moving the blade 106 to the ground angle.

The protection valve controller 354 outputs a different signal (e.g., a different amount of current) to the valve spool position controller 319 to cause the valve spool 321 to move to one of the four valve positions. As described above, the protection valve controller 354 moves the valve spool 321 to the first position to cause the blade 106 to move to a coarse pitch angle. The protection valve controller 354 moves the valve spool 321 to the second position to cause the blade 106 to move to a coarse pitch angle at a slower pace than the pace associated with the maximum drive coarse position. The protection valve controller 354 moves the valve spool 321 to the third position to cause the blade 106 to not move or to be controlled by the counterweight 351. The protection valve controller 354 moves the valve spool 321 to the fourth position to cause the blade 106 to move to a pitch angle based on the fluid output by the primary sleeve 307.

By default, the protection valve controller 354 outputs a signal to the valve spool position controller 319 of the sleeve 320 to cause the valve spool 321 to move to the fourth position, the flight/ground range position (e.g., where the pitch angle of the blade 106 is controlled by the primary sleeve 307). When the protection valve controller 354 determines that the propeller speed is too high (e.g., relative to an overspeed limit) or the pitch of the blade 106 is lower than intended (e.g., relative to a pitch threshold), the protection valve controller 354 changes the signal to cause the valve spool 321 to move to the third position (e.g., the valve null position). When the protection valve controller 354 determines that the propeller speed has lowered (e.g., relative to an overspeed limit) or the pitch of the blade is higher (e.g., relative to a pitch threshold), the protection valve controller 354 may change the signal back to move the valve spool 321 back to the flight/ground range position. When the protection valve controller 354 determines that the propeller speed is still too high (e.g., relative to an overspeed limit) or the pitch of the blade is still too low (e.g., relative to a pitch threshold), the protection valve controller 354 changes the signal to the partial drive coarse position (e.g., position 2). When the protection valve controller 354 determines that the propeller speed has lowered (e.g., relative to an overspeed limit) or the pitch of the blade is higher (e.g., relative to a pitch threshold), the protection valve controller 354 may change the signal back to move the valve spool 321 back to the valve null position. When the protection valve controller 354 determines that the propeller speed is still too high (e.g., relative to an overspeed limit) or the pitch of the blade is still too low (e.g., relative to a pitch threshold), the protection valve controller 354 changes the signal to a signal corresponding to the maximum drive coarse position (e.g., position 1). The protection valve controller 354 maintains the signal corresponding to the maximum drive coarse position until the propeller speed slows by a particular amount or the pitch of the blade increases by a particular amount. The protection valve controller 354 executes control algorithm(s) that output signal demand(s) to, for example, the protection valve assembly 318, for position(s) between the default (e.g., normal) flow/flight range position and the fully drive coarse position. The control algorithm(s) can include a Proportional-Integral-Derivative (PID) algorithm that calculates a control error from desired outputs and a valve position request. For example, if a speed increase exceeds an overspeed limit, the PID algorithm determines an amount to open the valve 318 as a function of how fast the propeller is accelerating and the amount the propeller has accelerated. The control algorithm(s) executed by the protection valve controller 354 continue to modulate the valve position to stabilize speed at a speed set point.

If there are contradictory instructions or feedback obtained via the component interface 360, the protection valve controller 354 utilizes a priority of positions to determine a position of the valve spool 321. The highest priority (e.g., priority 1) corresponds to driving coarse due for auxiliary feathering (e.g., feathering caused by an electrically driven pump from a reserve oil supply), auto-feathering, and/or loss of power; the second highest priority (e.g., priority 2) corresponds to overspeed protection/ground range protection in which valve position varies as a function of propeller pitch; and the lowest priority (e.g., priority 3) corresponds to default (e.g., normal) flight operation and/or ground operation in which the valve is in a default position (e.g., the flight/ground range position of FIG. 3). For example, when the aircraft is operating in flight operation (e.g., priority 3), the protection valve controller 354 outputs a signal via the component interface 360 to move the valve spool 321 when a higher priority functionality is triggered. When the aircraft is operating in overspeed protection mode (e.g., priority 2) because the protection valve controller 354 has determined that the propeller speed is too high, as described above, the overspeed protection mode takes priority over a pilot selected flight operation mode. Thus, the protection valve controller 354 may override the primary control valve assembly 305 using one of the protect valve positions 1-4 to reduce propeller speed. In the overspeed protection mode, the amount of opening of the protection valve 318 (e.g., a proportional servo valve) is a function of propeller overspeed at a point in time as computed by the protection valve controller 354 (e.g., proportional valve position versus input signal). Thus, the amount of opening of the protection valve 318 can be anywhere between protect valve positions 1-4. As described above, the protection valve controller 354 may only allow the beta tube 345a to move to a position corresponding to a ground pitch angle when the aircraft is grounded. For example, the protection valve controller 354 may, based on the pitch angle of the blade decreasing below a threshold pitch angle and the aircraft being in flight, adjust the position of the valve spool 321 to cause the valve spool 321 to stop moving or move toward a position corresponding to a coarse pitch angle. When drive coarse is enabled, the protection valve controller 354 outputs a signal to move the valve spool 321 to the maximum drive coarse position or the partial drive coarse position regardless of instructions from a pilot or the system.

FIG. 8 is a block diagram of an example implementation of the protection valve controller 354 of FIGS. 3-6. The protection valve controller 354 includes example interface(s) 800, an example driver 802, and an example valve controller 804.

The interface(s) 800 of FIG. 8 obtain(s) information from the primary controller 352 (e.g., pilot instructions, flight modes, autopilot instructions, etc.). Additionally, the interface(s) 800 obtain(s) feedback information from one or more sensors that relates to the blade 106. For example, the interface(s) 800 can obtain propeller speed, pitch angles measurements of the blade 106, and/or sensor readings from the pressure sensor 355. The interface(s) 800 may include one interface to obtain all signals, or multiple interface(s) 800 to obtain the multiple signals.

The driver 802 of FIG. 8 drives the valve spool position controller 319 to move the valve spool 321 to one or more particular positions. For example, the driver 802 is capable of outputting different amounts of current, each amount of current corresponding to moving the valve spool 321 to a different position. The driver 802 is controlled by the valve controller 804.

The valve controller 804 selects a position for the valve spool 321 based on flight mode, pilot instructions, system instructions, autopilot instructions, feedback information, etc. By default, the valve controller 804 selects the position for the valve spool 321 to be the flight/ground range position of FIG. 3. However, when the valve controller 804 determines that overspeed protection is needed, the valve controller 804 selects a different position for the valve spool (e.g., corresponding to FIGS. 3-6), as further described above. When the valve controller 804 obtains an indication that ground operation has been enabled (e.g., the aircraft is grounded), the valve controller 804 selects the position for the valve spool 321 to be the flight/ground range position of FIG. 3 so that the hydraulic fluid can be pumped into the fine pitch chamber 347 (e.g., via the first gallery 343) until the blade 106 reaches the ground pitch angle. When ground operation is not enabled (e.g., the aircraft is in flight), the valve controller 804 monitors the position of the valve spool 321 and/or the pitch angle of the blade 106 to determine whether the position and/or pitch angle fail to satisfy a threshold (e.g. a threshold pitch angle). When the valve controller 804 determines that the position and/or pitch angle fail to satisfy the threshold, the valve controller 804 selects the null position of FIG. 4 or one of the drive coarse positions of FIGS. 5 and/or 6 to prevent the beta tube 345a of the hydraulic fluid transfer unit 338 from moving rearward (with respect to the orientation of FIG. 3) preventing the blade 106 from reaching the ground pitch angle. When the valve controller 804 obtains an indication to drive coarse (e.g., due to loss of power, auto-feathering instructions, auxiliary feathering instructions, etc.), the valve controller 804 selects the position for the valve spool 321 to be the maximum drive coarse position of FIG. 7 or the partial drive coarse position of FIG. 6. Additionally, the valve controller 804 may determine that there is a friction issue, a valve issue, or an issue with the counterweight 351, based on one or more pressure measurements from the pressure sensor 355, as further described above. The valve controller 804 can trigger alerts based on the determined issue(s). The valve controller 804 controls the driver 802 based on the determined valve spool position.

While an example manner of implementing the protection valve controller 354 of FIGS. 3-6 is illustrated in FIG. 8, one or more of the elements, processes, and/or devices illustrated in FIG. 8 may be combined, divided, re-arranged, omitted, eliminated, and/or implemented in any other way. Further, the interface(s) 800, the driver 802, the valve controller 804, and/or, more generally, the example protection valve controller 354 of FIG. 8, may be implemented by hardware alone or by hardware in combination with software and/or firmware. Thus, for example, the interface(s) 800, the driver 802, the valve controller 804, and/or, more generally, the example protection valve controller 354, could be implemented by programmable circuitry in combination with machine-readable instructions (e.g., firmware or software), processor circuitry, analog circuit(s), digital circuit(s), logic circuit(s), programmable processor(s), programmable microcontroller(s), graphics processing unit(s) (GPU(s)), digital signal processor(s) (DSP(s)), ASIC(s), programmable logic device(s) (PLD(s)), and/or field programmable logic device(s) (FPLD(s)) such as FPGAs. Further still, the example protection valve controller 354 of FIG. 8 may include one or more elements, processes, and/or devices in addition to, or instead of, those illustrated in FIG. 8, and/or may include more than one of any or all of the illustrated elements, processes, and devices.

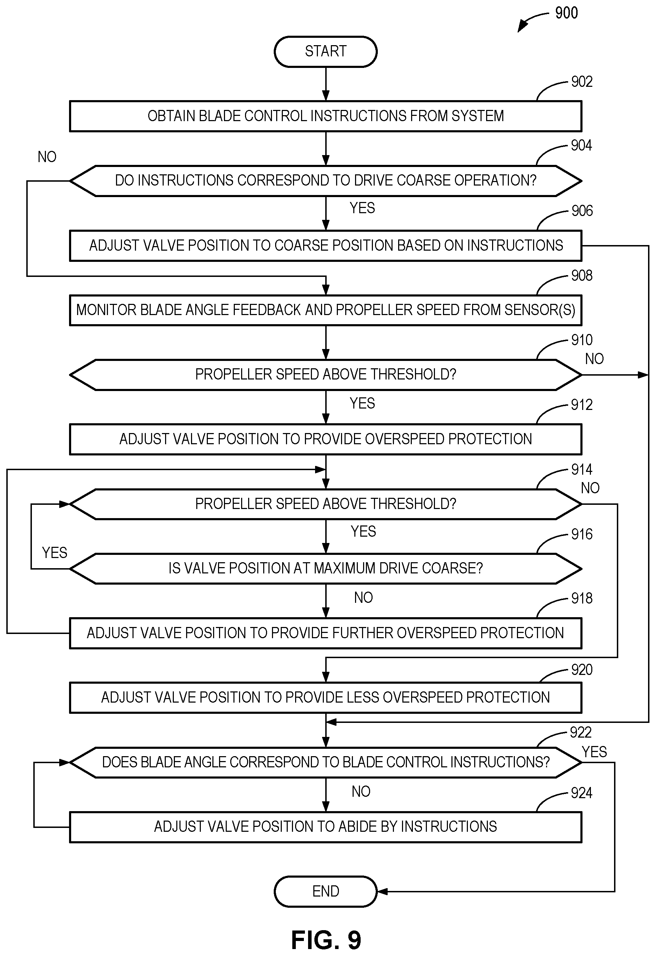

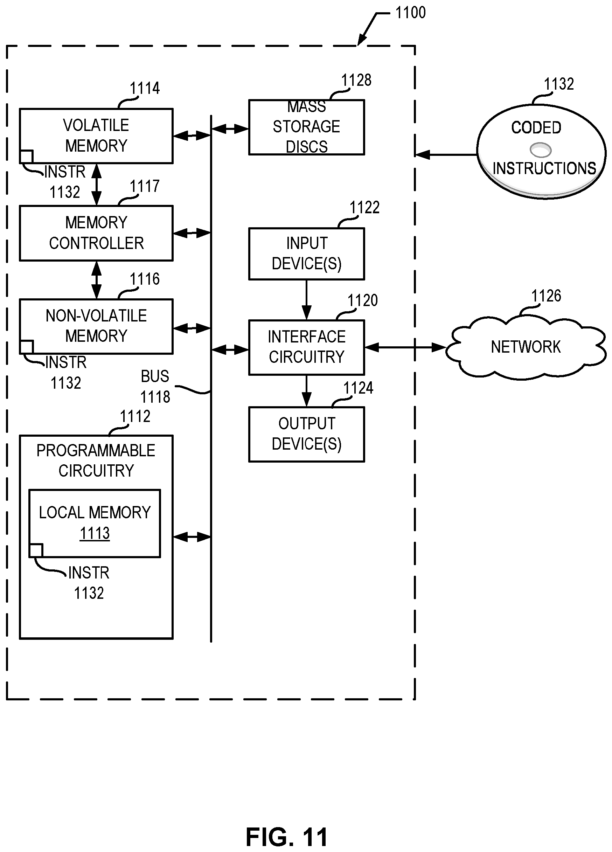

A flowchart representative of example machine-readable instructions, which may be executed by programmable circuitry to implement and/or instantiate the protection valve controller 354 of FIG. 8 and/or representative of example operations which may be performed by programmable circuitry to implement and/or instantiate the protection valve controller 354 of FIG. 8, is shown in FIG. 9. The machine-readable instructions may be one or more executable programs or portion(s) of one or more executable programs for execution by programmable circuitry such as the programmable circuitry 1112 shown in the example processor platform 1100 discussed below in connection with FIG. 11 and/or may be one or more function(s) or portion(s) of functions to be performed by the example programmable circuitry (e.g., an FPGA). In some examples, the machine-readable instructions cause an operation, a task, etc., to be carried out and/or performed in an automated manner in the real world. As used herein, "automated" means without human involvement.

The program may be embodied in instructions (e.g., software and/or firmware) stored on one or more non-transitory computer-readable and/or machine-readable storage medium such as cache memory, a magnetic-storage device or disk (e.g., a floppy disk, a Hard Disk Drive (HDD), etc.), an optical-storage device or disk (e.g., a Blu-ray disk, a Compact Disk (CD), a Digital Versatile Disk (DVD), etc.), a Redundant Array of Independent Disks (RAID), a register, ROM, a solid-state drive (SSD), SSD memory, non-volatile memory (e.g., electrically erasable programmable read-only memory (EEPROM), flash memory, etc.), volatile memory (e.g., Random Access Memory (RAM) of any type, etc.), and/or any other storage device or storage disk. The instructions of the non-transitory computer-readable and/or machine-readable medium may program and/or be executed by programmable circuitry located in one or more hardware devices, but the entire program and/or parts thereof could alternatively be executed and/or instantiated by one or more hardware devices other than the programmable circuitry and/or embodied in dedicated hardware. The machine-readable instructions may be distributed across multiple hardware devices and/or executed by two or more hardware devices (e.g., a server and a client hardware device). For example, the client hardware device may be implemented by an endpoint client hardware device (e.g., a hardware device associated with a human and/or machine user) or an intermediate client hardware device gateway (e.g., a radio access network (RAN)) that may facilitate communication between a server and an endpoint client hardware device. Similarly, the non-transitory computer-readable storage medium may include one or more mediums. Further, although the example program is described with reference to the flowchart illustrated in FIG. 9, many other methods of implementing the example protection valve controller 354 may alternatively be used. For example, the order of execution of the blocks of the flowchart(s) may be changed, and/or some of the blocks described may be changed, eliminated, or combined. Additionally or alternatively, any or all of the blocks of the flow chart may be implemented by one or more hardware circuits (e.g., processor circuitry, discrete and/or integrated analog and/or digital circuitry, an FPGA, an ASIC, a comparator, an operational-amplifier (op-amp), a logic circuit, etc.) structured to perform the corresponding operation without executing software or firmware. The programmable circuitry may be distributed in different network locations and/or local to one or more hardware devices (e.g., a single-core processor (e.g., a single core CPU), a multi-core processor (e.g., a multi-core CPU, an XPU, etc.)). For example, the programmable circuitry may be a CPU and/or an FPGA located in the same package (e.g., the same integrated circuit (IC) package or in two or more separate housings), one or more processors in a single machine, multiple processors distributed across multiple servers of a server rack, multiple processors distributed across one or more server racks, etc., and/or any combination(s) thereof.

The machine-readable instructions described herein may be stored in one or more of a compressed format, an encrypted format, a fragmented format, a compiled format, an executable format, a packaged format, etc. Machine-readable instructions as described herein may be stored as data (e.g., computer-readable data, machine-readable data, one or more bits (e.g., one or more computer-readable bits, one or more machine-readable bits, etc.), a bitstream (e.g., a computer-readable bitstream, a machine-readable bitstream, etc.), etc.) or a data structure (e.g., as portion(s) of instructions, code, representations of code, etc.) that may be utilized to create, manufacture, and/or produce machine executable instructions. For example, the machine-readable instructions may be fragmented and stored on one or more storage devices, disks, and/or computing devices (e.g., servers) located at the same or different locations of a network or collection of networks (e.g., in the cloud, in edge devices, etc.). The machine-readable instructions may require one or more of installation, modification, adaptation, updating, combining, supplementing, configuring, decryption, decompression, unpacking, distribution, reassignment, compilation, etc., in order to make them directly readable, interpretable, and/or executable by a computing device and/or other machine. For example, the machine-readable instructions may be stored in multiple parts, which are individually compressed, encrypted, and/or stored on separate computing devices, wherein the parts when decrypted, decompressed, and/or combined form a set of computer-executable and/or machine executable instructions that implement one or more functions and/or operations that may together form a program such as that described herein.

In another example, the machine-readable instructions may be stored in a state in which they may be read by programmable circuitry, but require addition of a library (e.g., a dynamic link library (DLL)), a software development kit (SDK), an application programming interface (API), etc., in order to execute the machine-readable instructions on a particular computing device or other device. In another example, the machine-readable instructions may need to be configured (e.g., settings stored, data input, network addresses recorded, etc.) before the machine-readable instructions and/or the corresponding program(s) can be executed in whole or in part. Thus, machine readable, computer readable and/or machine-readable media, as used herein, may include instructions and/or program(s) regardless of the particular format or state of the machine-readable instructions and/or program(s).

The machine-readable instructions described herein can be represented by any past, present, or future instruction language, scripting language, programming language, etc. For example, the machine-readable instructions may be represented using any of the following languages: C, C++, Java, C#, Perl, Python, JavaScript, HyperText Markup Language (HTML), Structured Query Language (SQL), Swift, etc.

As mentioned above, the example operations of FIG. 9 may be implemented using executable instructions (e.g., computer-readable and/or machine-readable instructions) stored on one or more non-transitory computer-readable and/or machine-readable media. As used herein, the terms non-transitory computer-readable medium, non-transitory computer-readable storage medium, non-transitory machine-readable medium, and/or non-transitory machine-readable storage medium are expressly defined to include any type of computer-readable storage device and/or storage disk and to exclude propagating signals and to exclude transmission media. Examples of such non-transitory computer-readable medium, non-transitory computer-readable storage medium, non-transitory machine-readable medium, and/or non-transitory machine-readable storage medium include optical storage devices, magnetic storage devices, an HDD, a flash memory, a read-only memory (ROM), a CD, a DVD, a cache, a RAM of any type, a register, and/or any other storage device or storage disk in which information is stored for any duration (e.g., for extended time periods, permanently, for brief instances, for temporarily buffering, and/or for caching of the information). As used herein, the terms "non-transitory computer-readable storage device" and "non-transitory machine-readable storage device" are defined to include any physical (mechanical, magnetic, and/or electrical) hardware to retain information for a time period, but to exclude propagating signals and to exclude transmission media. Examples of non-transitory computer-readable storage devices and/ or non-transitory machine-readable storage devices include random access memory of any type, read only memory of any type, solid state memory, flash memory, optical discs, magnetic disks, disk drives, and/or redundant array of independent disks (RAID) systems. As used herein, the term "device" refers to physical structure such as mechanical and/or electrical equipment, hardware, and/or circuitry that may or may not be configured by computer-readable instructions, machine-readable instructions, etc., and/or manufactured to execute computer-readable instructions, machine-readable instructions, etc.

FIG. 9 is a flowchart representative of example machine-readable instructions and/or example operations 900 that may be executed, instantiated, and/or performed by programmable circuitry (e.g., the protection valve controller 354 of FIG. 8) to control the pitch control protection system 170 of FIGS. 1A-1B and 3-6. The example machine-readable instructions and/or the example operations 900 of FIG. 9 begin at block 902, at which the interface(s) 800 obtains blade control instructions from the system (e.g., from the primary controller 352). The blade control instructions may identify whether the aircraft is in flight or grounded, the operation mode of the aircraft (e.g., takeoff, autopilot, landing, etc.), instructions and/or triggers (e.g., auto-feathering instruction, power loss instructions, pilot instructions, etc.), etc. When no instructions are obtained, the driver 802 drives the valve spool 321 of the sleeve 320 to the flight/ground range position of FIG. 3 (e.g., the default position). In some examples, if no instructions are obtained, the driver 802 does not output a signal and the springs 322 position the valve spool 321 to the flight/ground range position of FIG. 3.

At block 904, the valve controller 804 determines whether the instructions correspond to drive coarse operation. When the valve controller 804 determines that the instructions do not correspond to drive coarse operation (block 904: NO), control continues to block 908, as further described below. When the valve controller 804 determines that the instructions correspond to drive coarse operation (block 904: YES), the valve controller 804 causes the driver 802 to output a control signal to the valve spool position controller 319 of the protection valve assembly 318 to adjust the position of the valve spool 321 to the maximum drive coarse or partial drive coarse position of FIGS. 5 or 6 (block 906). As described above, drive coarse operation is based on a power loss event, an auto-feathering event, an auxiliary feathering event, etc. and ground operation corresponds to when the aircraft is grounded or not in flight.

At block 908, the valve controller 804 monitors the blade angle feedback information and/or propeller speed from one or more sensor(s) (e.g., obtained via the interface(s) 800). At block 910, the valve controller 804 determines whether the propeller speed is above a threshold (e.g., between 102%-105% of the takeoff propeller speed, where the propeller speed may be 850 to 200 revolutions per minute, depending on propeller diameter). When the valve controller 804 determines that the propeller speed is not above a threshold (block 910: NO), control continues to block 922, as further described below. When the valve controller 804 determines that the propeller speed is above a threshold (block 910: YES), the valve controller 804 causes the driver 802 to output a signal to the valve spool position controller 319 of the protection valve assembly 318 to adjust the position of the valve spool 321 to provide overspeed protection (block 912). For example, the valve controller 804 can cause the valve spool 321 of the protection valve assembly 318 to move (a) from the flight/ground range position of FIG. 3 to the valve null position of FIG. 4, (b) from the valve null position of FIG. 4 to the partial drive coarse position of FIG. 5, or (c) from the partial drive coarse position of FIG. 5 to the maximum drive coarse position of FIG. 6 causing the blade to either stop adjusting pitch angle or increasing the pitch angle to a coarser pitch angle.

At block 914, the valve controller 804 determines whether the propeller speed is still above the threshold. When the valve controller 804 determines that the propeller speed is no longer above the threshold (block 914: NO), the valve controller 804 causes the driver 802 to output a control signal to the valve spool position controller 319 of the protection valve assembly 318 to cause the valve spool 321 to provide less overspeed protection (block 920) and control continues to block 922, as further described below. For example, the valve controller 804 can output a control signal to cause the valve spool 321 to move to the flight/ground range position of FIG. 3. When the valve controller 804 determines that the propeller speed is still above the threshold (block 914: YES), the valve controller 804 determines the current position of the valve spool 321 is at the maximum drive coarse position of FIG. 6 (block 916). When the valve spool position is not at maximum drive coarse position, the valve spool 321 can be moved to provide additional overspeed protection (i.e., because the valve spool position has not yet reached the maximum drive coarse position). If the valve controller 804 determines that the current position of the valve spool 321 is at the maximum drive coarse position of FIG. 6 (block 916: YES), control returns to block 914 for continued monitoring of whether the propeller speed is still above the threshold. Control proceeds to block 920 when the valve controller 804 determines that the propeller speed is no longer above the threshold, at which time the valve spool 321 can be moved to provide less overspeed protection.

At block 922, the valve controller 804 determines whether the blade angle corresponds to the blade control instructions. The valve controller 804 may process the blade control instructions and determine whether the blade pitch angle projected to a pitch angle that corresponds to the blade control instructions. For example, when the blade control instructions correspond to adjusting the pitch angle of the blade 106 to a coarse pitch but the blade pitch is moving toward a fine pitch angle, the valve controller 804 determines that the blade angle does not correspond to the blade control instructions. In another example, when the blade control instructions correspond to adjusting the pitch angle of the blade 106 to a coarse pitch but the blade pitch is adjusting at a rate below a threshold rate, the valve controller 804 determines that the blade angle does not correspond to the blade control instructions. When the valve controller 804 determines that the blade angle corresponds to the blade control instructions (block 922: YES), the instructions 900 end. When the valve controller 804 determines that the blade angle does not correspond to the blade control instructions (block 922: NO), the valve controller 804 causes the driver 802 to output a control signal to the valve spool position controller 319 to adjust the position of the valve spool 321 in the sleeve 320 to abide by the instructions (block 924). The instructions 900 end when the valve controller 804 determines that the blade angle corresponds to the blade control instructions (block 922: YES).

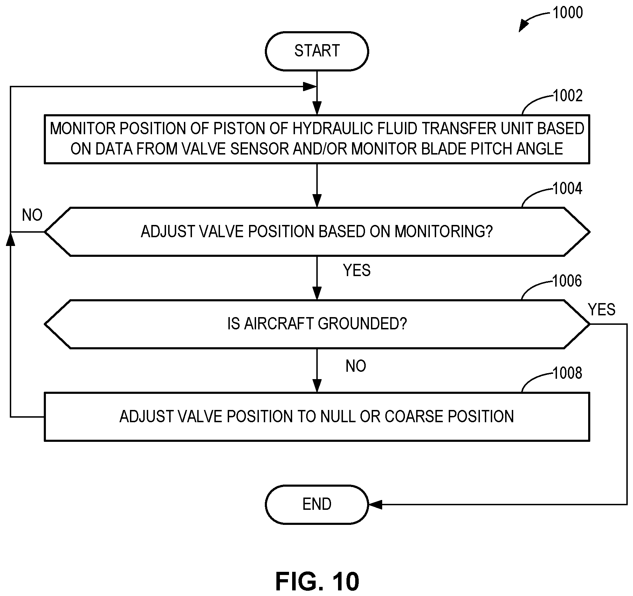

FIG. 10 is a flowchart representative of example machine-readable instructions and/or example operations 1000 that may be executed, instantiated, and/or performed by programmable circuitry (e.g., the protection valve controller 354 of FIG. 8) to allow or prevent the blade 106 from moving to a position corresponding to the ground pitch angle. The example machine-readable instructions and/or the example operations 1000 of FIG. 10 begin at block 1002, at which valve controller 804 monitors the position of the beta tube 345a of the hydraulic fluid transfer unit 338. In some examples, the valve controller 804 monitors the position of the piston based on information from the piston sensor 356. In some examples, another sensor may be included that senses the pitch angle of the blade 106. In such examples, the valve controller 804 can monitor the pitch angle of the blade 106.

At block 1004, the valve controller 804 determines whether the position of the valve spool 321 of the protection valve assembly 318 should be adjusted based on the monitoring (e.g., based on the piston position failing to satisfy a threshold position), based on the pitch angle of the blade 106 failing to satisfy a threshold blade angle). As described above, when the valve spool 321 is pushed past a threshold position, the blade 106 is moved to a ground pitch angle. The ground pitch angle may be restricted with in flight due to regulations (e.g., safety regulations).

At block 1006, the valve controller 804 determines whether the aircraft is grounded. For example, the interface(s) 800 may obtain an instruction and/or information related to the aircraft being grounded (e.g., an altitude measurement, a speed measurement, instructions from the FADEC 180, etc.). When the valve controller 804 determines that the aircraft is grounded (block 1006: YES), the valve controller 804 does not adjust control of the protection valve and allows the blade 106 to move to the ground pitch angle. When the valve controller 804 determines that the aircraft is not grounded (e.g., the aircraft is in flight) (block 1006: NO), the valve controller 804 outputs a control signal to the valve spool position controller 319 to adjust the valve spool 321 to one of the valve positions of FIGS. 3-6 (e.g., the null valve position, the partial drive coarse position, or the maximum drive coarse position) (block 1008). In this manner, hydraulic fluid stops being pumped into the fine pitch chamber 347 and/or start being pumped into the coarse pitch chamber 349 preventing the blade 106 from reaching the ground pitch angle.

FIG. 11 is a block diagram of an example programmable circuitry platform 1100 structured to execute and/or instantiate the example machine-readable instructions and/or the example operations of FIG. 9 to implement the protection valve controller 354 of FIGS. 3-6 and 8. The programmable circuitry platform 1100 can be, for example, a server, a computer, a controller, a self-learning machine (e.g., a neural network), or any other type of computing and/or electronic device.

The programmable circuitry platform 1100 of the illustrated example includes programmable circuitry 1112. The programmable circuitry 1112 of the illustrated example is hardware. For example, the programmable circuitry 1112 can be implemented by one or more integrated circuits, logic circuits, FPGAs, microprocessors, CPUs, GPUs, DSPs, and/or microcontrollers from any desired family or manufacturer. The programmable circuitry 1112 may be implemented by one or more semiconductor based (e.g., silicon based) devices. The programmable circuitry 1112 can implement the interface(s) 800, driver 802, and the valve controller 804 of FIG. 8.

The programmable circuitry 1112 of the illustrated example includes a local memory 1113 (e.g., a cache, registers, etc.). The programmable circuitry 1112 of the illustrated example is in communication with main memory 1114, 1116, which includes a volatile memory 1114 and a non-volatile memory 1116, by a bus 1118. The volatile memory 1114 may be implemented by Synchronous Dynamic Random Access Memory (SDRAM), Dynamic Random Access Memory (DRAM), RAMBUS^{®} Dynamic Random Access Memory (RDRAM^{®}), and/or any other type of RAM device. The non-volatile memory 1116 may be implemented by flash memory and/or any other desired type of memory device. Access to the main memory 1114, 1116 of the illustrated example is controlled by a memory controller 1117. In some examples, the memory controller 1117 may be implemented by one or more integrated circuits, logic circuits, microcontrollers from any desired family or manufacturer, or any other type of circuitry to manage the flow of data going to and from the main memory 1114, 1116.

The programmable circuitry platform 1100 of the illustrated example also includes interface circuitry 1120. The interface circuitry 1120 may be implemented by hardware in accordance with any type of interface standard, such as an Ethernet interface, a universal serial bus (USB) interface, a Bluetooth^{®} interface, a near field communication (NFC) interface, a Peripheral Component Interconnect (PCI) interface, and/or a Peripheral Component Interconnect Express (PCIe) interface.

In the illustrated example, one or more input devices 1122 are connected to the interface circuitry 1120. The input device(s) 1122 permit(s) a user (e.g., a human user, a machine user, etc.) to enter data and/or commands into the programmable circuitry 1112. The input device(s) 1122 can be implemented by, for example, an audio sensor, a microphone, a camera (still or video), a keyboard, a button, a mouse, a touchscreen, a trackpad, and/or a voice recognition system.

One or more output devices 1124 are also connected to the interface circuitry 1120 of the illustrated example. The output device(s) 1124 can be implemented, for example, by display devices (e.g., a light emitting diode (LED), an organic light emitting diode (OLED), a liquid crystal display (LCD), a cathode ray tube (CRT) display, an in-place switching (IPS) display, a touchscreen, etc.), a tactile output device, and/or speaker. The interface circuitry 1120 of the illustrated example, thus, typically includes a graphics driver card, a graphics driver chip, and/or graphics processor circuitry such as a GPU.

The interface circuitry 1120 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 1126. The communication can be by, for example, an Ethernet connection, a digital subscriber line (DSL) connection, a telephone line connection, a coaxial cable system, a satellite system, a beyond-line-of-sight wireless system, a line-of-sight wireless system, a cellular telephone system, an optical connection, etc.

The programmable circuitry platform 1100 of the illustrated example also includes one or more mass storage discs or devices 1128 to store firmware, software, and/or data. Examples of such mass storage discs or devices 1128 include magnetic storage devices (e.g., floppy disk, drives, HDDs, etc.), optical storage devices (e.g., Blu-ray disks, CDs, DVDs, etc.), RAID systems, and/or solid-state storage discs or devices such as flash memory devices and/or SSDs.

Machine-readable instructions 1132, which may be implemented by the machine-readable instructions of FIG. 9, may be stored in the volatile memory 1114, in the non-volatile memory 1116, and/or on at least one non-transitory computer-readable storage medium such as a CD or DVD which may be removable.

From the foregoing, it will be appreciated that example systems, apparatus, articles of manufacture, and methods have been disclosed to control pitch of a propeller blade. Disclosed herein is an example blade pitch control system having a hydraulic system to provide various pitch control functions using less valves than traditional techniques. Accordingly, examples disclosed herein result in a pitch control system that is less costly, less complex, and more reliable than traditional techniques because examples disclosed herein utilize less components offering less failure points. Additionally, examples disclosed herein include a propeller pitch control system that combines protection function into a single valve for propellers employing a dual acting hydraulic pitch actuator. The disclosed dual acting propeller is able to control propeller pitch with a higher bandwidth and more linear system gain, which improves accuracy of propeller speed and accuracy of synchrophase control (e.g., to reduce noise). Thus, the disclosed systems, apparatus, articles of manufacture, and methods are accordingly directed to one or more improvement(s) in the operation of a machine such as a computer or other electronic and/or mechanical device.

Example methods, apparatus, systems, and articles of manufacture to control pitch of a propeller blade are disclosed herein. Further aspects of the present disclosure are provided by the subject matter of the following clauses.

A turbine engine including a propeller including a blade, the blade rotatable about a centerline axis to change a pitch of the blade; a coarse pitch chamber; a fine pitch chamber; a beta tube structured to move to the blade to a pitch angle based on an amount of hydraulic fluid in the coarse pitch chamber or the fine pitch chamber; a primary control valve including a first output and a second output, the primary control valve to pump hydraulic fluid from a hydraulic pump via the first output or the second output based on a control signal; a protection valve including a first input, a second input, a third input, and a spool valve; and a protection valve controller configured to: output a first control signal to cause the spool valve to move to a first position to cause hydraulic fluid to flow from one of (a) the first input of the protection valve to the fine pitch chamber or (b) the second input of the protection valve to the coarse pitch chamber, wherein a pitch angle of the blade is at a first pitch angle when the spool valve is in the first position; detect that the pitch angle of the blade has moved to a second pitch angle; determine that the second pitch angle of the blade is below a threshold pitch angle; and based on the second pitch angle of the blade being below the threshold pitch angle and an aircraft being in flight, output a second control signal to prevent the hydraulic fluid from reaching the fine pitch chamber.

The turbine engine according to the preceding clause, further including a spool valve position controller configured to control a position of the spool valve based on at least one of the first control signal or the second control signal from the protection valve controller.

The turbine engine according to any one or more of the preceding clauses, wherein the protection valve controller is configured to output a third control signal to cause the spool valve to move to a second position to cause the hydraulic fluid to flow from the third input of the protection valve to the coarse pitch chamber; and output a fourth control signal to cause the spool valve to move to a third position to block the hydraulic fluid from flowing into the fine pitch chamber and the coarse pitch chamber.

The turbine engine according to any one or more of the preceding clauses, wherein the protection valve controller is configured to prevent hydraulic fluid from reaching the fine pitch chamber by outputting a fifth control signal to cause the spool valve to move to one of the second position or the third position.

The turbine engine according to any one or more of the preceding clauses, further including a sensor, wherein the protection valve controller is configured to determine the pitch angle of the blade based on information from the sensor.

The turbine engine according to any one or more of the preceding clauses, wherein the sensor senses a position of the beta tube.

The turbine engine according to any one or more of the preceding clauses, wherein the sensor measures the pitch angle of the blade.

The turbine engine according to any one or more of the preceding clauses, wherein pumping hydraulic fluid into the coarse pitch chamber increases the pitch angle of the blade and pumping the hydraulic fluid into the fine pitch chamber decreases the pitch angle of the blade.

A non-transitory computer-readable storage medium including instructions that cause one or more programmable circuits to at least output a first control signal to cause a spool valve of a protection valve to move to a first position to cause hydraulic fluid to flow from one of (a) a first input of the protection valve to a fine pitch chamber of a hydraulic fluid transfer unit or (b) a second input of the protection valve to a coarse pitch chamber of the hydraulic fluid transfer unit, wherein a pitch angle of a blade of a propeller is at a first pitch angle when the spool valve is in the first position; detect that the pitch angle of the blade has moved to a second pitch angle; determine that the second pitch angle of the blade is below a threshold pitch angle; and based on the second pitch angle of the blade being below the threshold pitch angle and an aircraft being in flight, output a second control signal to prevent the hydraulic fluid from reaching the fine pitch chamber.

The non-transitory computer-readable storage medium according to any one or more of the preceding clauses, wherein the instructions cause the one or more programmable circuits to output at least one of the first control signal or the second control signal to a spool valve position controller to control a position of the spool valve.

The non-transitory computer-readable storage medium according to any one or more of the preceding clauses, wherein the instructions cause the one or more programmable circuits to output a third control signal to cause the spool valve to move to a second position to cause the hydraulic fluid to flow from a third input of the protection valve to the coarse pitch chamber; and output a fourth control signal to cause the spool valve to move to a third position to block the hydraulic fluid from flowing into the fine pitch chamber and the coarse pitch chamber.

The non-transitory computer-readable storage medium according to any one or more of the preceding clauses, wherein the instructions cause the one or more programmable circuits to prevent hydraulic fluid from reaching the fine pitch chamber by outputting a fifth control signal to cause the spool valve to move to one of the second position or the third position.

The non-transitory computer-readable storage medium according to any one or more of the preceding clauses, wherein the instructions cause the one or more programmable circuits to determine the pitch angle of the blade based on information from a sensor.

The non-transitory computer-readable storage medium according to any one or more of the preceding clauses, wherein the information from the sensor corresponds to a position of a beta tube.

The non-transitory computer-readable storage medium according to any one or more of the preceding clauses, wherein the information from the sensor corresponds the pitch angle of the blade.

The non-transitory computer-readable storage medium according to any one or more of the preceding clauses, wherein pumping hydraulic fluid into the coarse pitch chamber increases the pitch angle of the blade and pumping the hydraulic fluid into the fine pitch chamber decreases the pitch angle of the blade.

A method including causing a spool valve of a protection valve to move to a first position to cause hydraulic fluid to flow from one of (a) a first input of the protection valve to a fine pitch chamber of a hydraulic fluid transfer unit or (b) a second input of the protection valve to a coarse pitch chamber of the hydraulic fluid transfer unit, wherein a pitch angle of a blade of a propeller is at a first pitch angle when the spool valve is in the first position; detecting that the pitch angle of the blade has moved to a second pitch angle; determining that the second pitch angle of the blade is below a threshold pitch angle; and based the second pitch angle of the blade being below the threshold pitch angle and an aircraft being in flight, preventing the hydraulic fluid from reaching the fine pitch chamber.

The method according to any one or more of the preceding clauses, further including outputting a control signal to a spool valve position controller to control a position of the spool valve.

The method according to any one or more of the preceding clauses, further including causing the spool valve to move to a second position to cause the hydraulic fluid to flow from a third input of the protection valve to the coarse pitch chamber; and causing the spool valve to move to a third position to block the hydraulic fluid from flowing into the fine pitch chamber and the coarse pitch chamber.

The method according to any one or more of the preceding clauses, wherein the preventing the hydraulic fluid from reaching the fine pitch chamber includes causing the spool valve to move to one of the second position or the third position.

A turbine engine comprising a propeller including a blade, the blade rotatable about a centerline axis to change a pitch of the blade, means for changing the pitch of the blade including a piston, a coarse pitch chamber, and a fine pitch chamber, the piston structured to move to the blade to a pitch angle based on an amount of hydraulic fluid in the coarse pitch chamber or the fine pitch chamber, first means for controlling hydraulic fluid including a first output and a second output, the first means for controlling hydraulic fluid to pump hydraulic fluid from a hydraulic pump via the first output or the second output based on a control signal, second means for controlling hydraulic fluid including a first input, a second input, a third input, a first output, a second output and a piston, and means for outputting a control signal to output a first control signal to cause the piston of the second means for controlling hydraulic fluid to move to a first position to cause hydraulic fluid to flow from one of (a) the first input of the second means for controlling hydraulic fluid to the fine pitch chamber or (b) the second input of the second means for controlling hydraulic fluid to the coarse pitch chamber, and based on the pitch angle of the blade being below a threshold pitch angle and an aircraft being in flight, output a second control signal to prevent the hydraulic fluid from reaching the fine pitch chamber.

The turbo engine according to the preceding clause, further including means for controlling control a position of the piston based on at least one of the first control signal or the second control signal.

The turbo engine according to any one or more of the preceding clauses, wherein the means for outputting a control signal is configured to output a third control signal to cause the piston to move to a second position to cause the hydraulic fluid to flow from the third input of the second means for controlling hydraulic fluid to the coarse pitch chamber, and output a fourth control signal to cause the piston of the second means for controlling hydraulic fluid to move to a third position to block the hydraulic fluid from flowing into the fine pitch chamber and the coarse pitch chamber.

The turbo engine according to any one or more of the preceding clauses, wherein the means for outputting a control signal is configured to prevent hydraulic fluid from reaching the fine pitch chamber by outputting a fifth control signal to cause the piston to move to one of the second position of the third position.

The turbo engine according to any one or more of the preceding clauses, further including a sensor, wherein the means for outputting a control signal is configured to determine the pitch angle of the blade based on information from the sensor.

The turbo engine according to any one or more of the preceding clauses, wherein the sensor senses a position of the piston of the means for changing the pitch of the blade.

The turbo engine according to any one or more of the preceding clauses, wherein the sensor measures the pitch angle of the blade.

The turbo engine according to any one or more of the preceding clauses, wherein pumping hydraulic fluid into the coarse pitch chamber increases the pitch angle of the blade and pumping the hydraulic fluid into the fine pitch chamber decreases the pitch angle of the blade.

An apparatus comprising interface circuit to obtain information corresponding to a pitch angle of a blade of a propeller from a sensor, computer-readable instructions, and at least one programmable circuit to execute the computer-readable instructions to output a first control signal to cause a piston of a protection valve to move to a first position to cause hydraulic fluid to flow from one of (a) a first input of the protection valve to a fine pitch chamber of a hydraulic fluid transfer unit or (b) a second input of the protection valve to a coarse pitch chamber of the hydraulic fluid transfer unit, determine that the pitch angle of the blade of the propeller is below a threshold pitch angle, and based on the pitch angle of the blade of the propeller being below the threshold pitch angle and an aircraft being in flight, output a second control signal to prevent the hydraulic fluid from reaching the fine pitch chamber.

The apparatus according to the preceding clause, wherein the at least one programmable circuit is to output at least one of the first control signal or the second control signal to a piston position controller to control a position of the piston of the protection valve.

The apparatus according to any one or more of the preceding clauses, wherein the at least one programmable circuit is to output a third control signal to cause the piston to move to a second position to cause the hydraulic fluid to flow from a third input of the protection valve to the coarse pitch chamber, and output a fourth control signal to cause the piston of the protection valve to move to a third position to block the hydraulic fluid from flowing into the fine pitch chamber and the coarse pitch chamber.

The apparatus according to any one or more of the preceding clauses, wherein the at least one programmable circuit is to prevent hydraulic fluid from reaching the fine pitch chamber by outputting a fifth control signal to cause the piston of the protection valve to move to one of the second position of the third position.

The apparatus according to any one or more of the preceding clauses, wherein the at least one programmable circuit is to determine the pitch angle of the blade based on information from a sensor.

The apparatus according to any one or more of the preceding clauses, wherein the sensor senses a position of the piston of the hydraulic fluid transfer unit.

The apparatus according to any one or more of the preceding clauses, wherein the sensor measures the pitch angle of the blade.

The apparatus according to any one or more of the preceding clauses, wherein pumping hydraulic fluid into the coarse pitch chamber increases the pitch angle of the blade and pumping the hydraulic fluid into the fine pitch chamber decreases the pitch angle of the blade.

An engine comprising:
a propeller including a blade, the blade rotatable about a centerline axis to change a pitch of the blade;
a coarse pitch chamber;
a fine pitch chamber;
a beta tube structured to move to the blade to a pitch angle based on an amount of hydraulic fluid in the coarse pitch chamber or the fine pitch chamber;
a primary control valve including a first output and a second output, the primary control valve to pump hydraulic fluid from a hydraulic pump out via the first output or the second output based on a control signal;
a protection valve including a first input, a second input, a third input, a first output, a second output and a spool valve; and
a protection valve controller configured to:
   output a first control signal to cause the spool valve of the protection valve to move to a first position to cause hydraulic fluid to flow from one of (a) the first input of the protection valve to the fine pitch chamber or (b) the second input of the protection valve to the coarse pitch chamber of the hydraulic fluid transfer unit; and
   based on the pitch angle of the blade being above a threshold and an aircraft being in flight, output a second control signal to prevent the hydraulic fluid from reaching the fine pitch chamber of the hydraulic fluid transfer unit.

The turbine engine of any one or more of the preceding clauses, further including a spool valve position controller configured to control a position of the spool valve of the protection valve based on at least one of the first control signal or the second control signal from the protection valve controller.

The turbine engine of any one or more of the preceding clauses, wherein the protection valve controller is configured to:
output a third control signal to cause the spool valve of the protection valve to move to a second position to cause the hydraulic fluid to flow from the third input of the protection valve to the coarse pitch chamber of the hydraulic fluid transfer unit; and
output a fourth control signal to cause the spool valve of the protection valve to move to a third position to block the hydraulic fluid from flowing into the fine pitch chamber and the coarse pitch chamber.

The turbine engine of any one or more of the preceding clauses, wherein the protection valve controller is configured to prevent hydraulic fluid from reaching the fine pitch chamber by outputting a fifth control signal to cause the spool valve of the protection valve to move to one of the second position or the third position.

The turbine engine of any one or more of the preceding clauses, further including a sensor, wherein the protection valve controller is configured to determine the pitch angle of the blade based on information from the sensor.

The turbine engine of any one or more of the preceding clauses, wherein the sensor senses a position of the beta tube.

The turbine engine of any one or more of the preceding clauses, wherein the sensor measures the pitch angle of the blade.

The turbine engine of any one or more of the preceding clauses, wherein pumping hydraulic fluid into the coarse pitch chamber increases the pitch angle of the blade and pumping the hydraulic fluid into the fine pitch chamber decreases the pitch angle of the blade.

A non-transitory computer readable storage medium comprising instruction which cause one or more programmable circuits to at least:
output a first control signal to cause a spool valve of a protection valve to move to a first position to cause hydraulic fluid to flow from one of (a) a first input of the protection valve to a fine pitch chamber of a hydraulic fluid transfer unit or (b) a second input of the protection valve to a coarse pitch chamber of the hydraulic fluid transfer unit;
determine that a pitch angle of a blade of a propellor is above a threshold; and
based on the pitch angle of the blade of the propellor being above the threshold and an aircraft being in flight, output a second control signal to prevent the hydraulic fluid from reaching the fine pitch chamber of the hydraulic fluid transfer unit.

The non-transitory computer readable storage medium of any one or more of the preceding clauses, wherein the instructions cause the one or more programmable circuits to output at least one of the first control signal or the second control signal to a spool valve position controller to control a position of the spool valve of the protection valve.

The non-transitory computer readable storage medium of any one or more of the preceding clauses, wherein the instructions cause the one or more programmable circuits to:
output a third control signal to cause the spool valve of the protection valve to move to a second position to cause the hydraulic fluid to flow from a third input of the protection valve to the coarse pitch chamber of the hydraulic fluid transfer unit; and
output a fourth control signal to cause the spool valve of the protection valve to move to a third position to block the hydraulic fluid from flowing into the fine pitch chamber and the coarse pitch chamber.

The non-transitory computer readable storage medium of any one or more of the preceding clauses, wherein the instructions cause the one or more programmable circuits to prevent hydraulic fluid from reaching the fine pitch chamber by outputting a fifth control signal to cause the spool valve of the protection valve to move to one of the second position or the third position.

The non-transitory computer readable storage medium of any of any one or more of the preceding clauses, wherein the instructions cause the one or more programmable circuits to determine the pitch angle of the blade based on information from a sensor.

The non-transitory computer readable storage medium of any one or more of the preceding clauses, wherein the sensor senses a position of a beta tube.

The non-transitory computer readable storage medium of any one or more of the preceding clauses, wherein the sensor measures the pitch angle of the blade.

The non-transitory computer readable storage medium of any of any one or more of the preceding clauses, wherein pumping hydraulic fluid into the coarse pitch chamber increases the pitch angle of the blade and pumping the hydraulic fluid into the fine pitch chamber decreases the pitch angle of the blade.

A method comprising:
causing a spool valve of a protection valve to move to a first position to cause hydraulic fluid to flow from one of (a) a first input of the protection valve to a fine pitch chamber of a hydraulic fluid transfer unit or (b) a second input of the protection valve to a coarse pitch chamber of the hydraulic fluid transfer unit; and
determining that a pitch angle of a blade of a propellor is above a threshold
based the pitch angle of the blade of the propellor being above the threshold and an aircraft being in flight, preventing the hydraulic fluid from reaching the fine pitch chamber of the hydraulic fluid transfer unit.

The method of any one or more of the preceding clauses, further including outputting a control signal to a spool valve position controller to control a position of the spool valve of the protection valve.

The method of any one or more of the preceding clauses, further including:
causing the spool valve of the protection valve to move to a second position to cause the hydraulic fluid to flow from a third input of the protection valve to the coarse pitch chamber of the hydraulic fluid transfer unit; and
causing the spool valve of the protection valve to move to a third position to block the hydraulic fluid from flowing into the fine pitch chamber and the coarse pitch chamber.

The method of any one or more of the preceding clauses, wherein the preventing the hydraulic fluid from reaching the fine pitch chamber includes causing the spool valve of the protection valve to move to one of the second position or the third position.

A turbine engine comprising:
a propeller including a blade, the blade rotatable about a centerline axis to change a pitch of the blade;
a coarse pitch chamber;
a fine pitch chamber;
a beta tube structured to move the blade to a pitch angle based on an amount of hydraulic fluid in the coarse pitch chamber or the fine pitch chamber;
a primary control valve including a first output and a second output, the primary control valve to pump hydraulic fluid from a hydraulic pump via the first output or the second output based on a control signal;
a protection valve including a first input, a second input, a third input, and a spool valve; and
a protection valve controller configured to:
   output a first control signal to cause the spool valve to move to a first position to cause hydraulic fluid to flow from one of (a) the first input of the protection valve to the fine pitch chamber or (b) the second input of the protection valve to the coarse pitch chamber, wherein the pitch angle of the blade is at a first pitch angle when the spool valve is in the first position;
   detect that the pitch angle of the blade has moved to a second pitch angle;
   determine that the second pitch angle of the blade is below a threshold pitch angle; and
   based on the second pitch angle of the blade being below the threshold pitch angle and an aircraft being in flight, output a second control signal to prevent the hydraulic fluid from reaching the fine pitch chamber.

The turbine engine of any one or more of the preceding clauses, further including a spool valve position controller configured to control a position of the spool valve based on at least one of the first control signal or the second control signal.

The turbine engine of any one or more of the preceding clauses, wherein the protection valve controller is configured to:
output a third control signal to cause the spool valve to move to a second position to cause the hydraulic fluid to flow from the third input of the protection valve to the coarse pitch chamber; and
output a fourth control signal to cause the spool valve to move to a third position to block the hydraulic fluid from flowing into the fine pitch chamber and the coarse pitch chamber.

The turbine engine of any one or more of the preceding clauses, wherein the protection valve controller is configured to prevent hydraulic fluid from reaching the fine pitch chamber by outputting a fifth control signal to cause the spool valve to move to one of the second position or the third position.

The turbine engine of any one or more of the preceding clauses, further including a sensor, wherein the protection valve controller is configured to determine the pitch angle of the blade based on information from the sensor.

The turbine engine of any one or more of the preceding clauses, wherein the sensor senses a position of the beta tube.

The turbine engine of any one or more of the preceding clauses, wherein the sensor measures the pitch angle of the blade.

The turbine engine of any one or more of the preceding clauses, wherein pumping hydraulic fluid into the coarse pitch chamber increases the pitch angle of the blade and pumping the hydraulic fluid into the fine pitch chamber decreases the pitch angle of the blade.

A non-transitory computer-readable storage medium comprising instructions that cause one or more programmable circuits to at least:
output a first control signal to cause a spool valve of a protection valve to move to a first position to cause hydraulic fluid to flow from one of (a) a first input of the protection valve to a fine pitch chamber of a hydraulic fluid transfer unit or (b) a second input of the protection valve to a coarse pitch chamber of the hydraulic fluid transfer unit, wherein a pitch angle of a blade of a propeller is at a first pitch angle when the spool valve is in the first position;
detect that the pitch angle of the blade has moved to a second pitch angle;
determine that the second pitch angle of the blade is below a threshold pitch angle; and
based on the second pitch angle of the blade being below the threshold pitch angle and an aircraft being in flight, output a second control signal to prevent the hydraulic fluid from reaching the fine pitch chamber.

The non-transitory computer-readable storage medium of any one or more of the preceding clauses, wherein the instructions cause the one or more programmable circuits to output at least one of the first control signal or the second control signal to a spool valve position controller to control a position of the spool valve.

The non-transitory computer-readable storage medium of any one or more of the preceding clauses, wherein the instructions cause the one or more programmable circuits to:
output a third control signal to cause the spool valve to move to a second position to cause the hydraulic fluid to flow from a third input of the protection valve to the coarse pitch chamber; and
output a fourth control signal to cause the spool valve to move to a third position to block the hydraulic fluid from flowing into the fine pitch chamber and the coarse pitch chamber.

The non-transitory computer-readable storage medium of any one or more of the preceding clauses, wherein the instructions cause the one or more programmable circuits to prevent hydraulic fluid from reaching the fine pitch chamber by outputting a fifth control signal to cause the spool valve to move to one of the second position or the third position.

The non-transitory computer-readable storage medium of any one or more of the preceding clauses, wherein the instructions cause the one or more programmable circuits to determine the pitch angle of the blade based on information from a sensor.

The non-transitory computer-readable storage medium of any one or more of the preceding clauses, wherein the information from the sensor corresponds to a position of a beta tube.

The non-transitory computer-readable storage medium of any one or more of the preceding clauses, wherein the information from the sensor corresponds the pitch angle of the blade.

The non-transitory computer-readable storage medium of any one or more of the preceding clauses, wherein pumping hydraulic fluid into the coarse pitch chamber increases the pitch angle of the blade and pumping the hydraulic fluid into the fine pitch chamber decreases the pitch angle of the blade.

A method comprising:
causing a spool valve of a protection valve to move to a first position to cause hydraulic fluid to flow from one of (a) a first input of the protection valve to a fine pitch chamber of a hydraulic fluid transfer unit or (b) a second input of the protection valve to a coarse pitch chamber of the hydraulic fluid transfer unit, wherein a pitch angle of a blade of a propeller is at a first pitch angle when the spool valve is in the first position;
detecting that the pitch angle of the blade has moved to a second pitch angle;
determining that the second pitch angle of the blade is below a threshold pitch angle; and
based the second pitch angle of the blade being below the threshold pitch angle and an aircraft being in flight, preventing the hydraulic fluid from reaching the fine pitch chamber.

The method of any one or more of the preceding clauses, further including outputting a control signal to a spool valve position controller to control a position of the spool valve.

The method of any one or more of the preceding clauses, further including:
causing the spool valve to move to a second position to cause the hydraulic fluid to flow from a third input of the protection valve to the coarse pitch chamber; and
causing the spool valve to move to a third position to block the hydraulic fluid from flowing into the fine pitch chamber and the coarse pitch chamber.

The method of any one or more of the preceding clauses, wherein the preventing the hydraulic fluid from reaching the fine pitch chamber includes causing the spool valve to move to one of the second position or the third position.

Although certain example methods, apparatus and articles of manufacture have been disclosed herein, the scope of coverage of this patent is not limited thereto. On the contrary, this patent covers all methods, apparatus and articles of manufacture fairly falling within the scope of the claims of this patent.

## Claims

1. A turbine engine comprising:
a propeller (104) including a blade (106), the blade rotatable about a centerline axis (108) to change a pitch of the blade (106);
a coarse pitch chamber (349);
a fine pitch chamber (347);
a beta tube (345a) structured to move the blade (106) to a pitch angle based on an amount of hydraulic fluid in the coarse pitch chamber (349) or the fine pitch chamber (347);
a primary control valve (305) including a first output (314) and a second output (316), the primary control valve (305) to pump hydraulic fluid from a hydraulic pump (300) via the first output (314) or the second output (316) based on a control signal;
a protection valve (318) including a first input (330), a second input (331), a third input (332), and a spool valve (321); and
a protection valve controller (354) configured to:
output a first control signal to cause the spool valve (321) to move to a first position to cause hydraulic fluid to flow from one of (a) the first input (330) of the protection valve (318) to the fine pitch chamber (347) or (b) the second input (331) of the protection valve (318) to the coarse pitch chamber (349), wherein the pitch angle of the blade (106) is at a first pitch angle when the spool valve (321) is in the first position;
detect that the pitch angle of the blade (106) has moved to a second pitch angle;
determine that the second pitch angle of the blade (106) is below a threshold pitch angle; and
based on the second pitch angle of the blade (106) being below the threshold pitch angle and an aircraft being in flight, output a second control signal to prevent the hydraulic fluid from reaching the fine pitch chamber (347).

2. The turbine engine of claim 1, further including a spool valve position controller (319) configured to control a position of the spool valve (321) based on at least one of the first control signal or the second control signal.

3. The turbine engine of any preceding claim, wherein the protection valve controller (354) is configured to:
output a third control signal to cause the spool valve (321) to move to a second position to cause the hydraulic fluid to flow from the third input (332) of the protection valve (318) to the coarse pitch chamber (349); and
output a fourth control signal to cause the spool valve (321) to move to a third position to block the hydraulic fluid from flowing into the fine pitch chamber (347) and the coarse pitch chamber (349).

4. The turbine engine of claim 3, wherein the protection valve controller (354) is configured to prevent hydraulic fluid from reaching the fine pitch chamber (347) by outputting a fifth control signal to cause the spool valve (321) to move to one of the second position or the third position.

5. The turbine engine of any preceding claim, further including a sensor (356), wherein the protection valve controller (354) is configured to determine the pitch angle of the blade (106) based on information from the sensor (356).

6. The turbine engine of claim 5, wherein the sensor (356) senses a position of the beta tube (345a).

7. The turbine engine of an of claims 5-6, wherein the sensor (356) measures the pitch angle of the blade (106).

8. The turbine engine of any preceding claim, wherein pumping hydraulic fluid into the coarse pitch chamber (349) increases the pitch angle of the blade (106) and pumping the hydraulic fluid into the fine pitch chamber (347) decreases the pitch angle of the blade (106).

9. A non-transitory computer readable storage medium comprising instructions that cause one or more programmable circuits to at least:
output a first control signal to cause a spool valve (321) of a protection valve (318) to move to a first position to cause hydraulic fluid to flow from one of (a) a first input (330) of the protection valve (318) to a fine pitch chamber (347) of a hydraulic fluid transfer unit or (b) a second input (331) of the protection valve (318) to a coarse pitch chamber (349) of the hydraulic fluid transfer unit, wherein a pitch angle of a blade (106) of a propeller (104) is at a first pitch angle when the spool valve (321) is in the first position;
detect that the pitch angle of the blade (106) has moved to a second pitch angle;
determine that the second pitch angle of the blade (106) is below a threshold pitch angle; and
based on the second pitch angle of the blade (106) being below the threshold pitch angle and an aircraft being in flight, output a second control signal to prevent the hydraulic fluid from reaching the fine pitch chamber (347).

10. The non-transitory computer readable storage medium of claim 9, wherein the instructions cause the one or more programmable circuits to output at least one of the first control signal or the second control signal to a spool valve position controller (319) to control a position of the spool valve (321).

11. The non-transitory computer readable storage medium of claim 9, wherein the instructions cause the one or more programmable circuits to:
output a third control signal to cause the spool valve to move to a second position to cause the hydraulic fluid to flow from a third input (332) of the protection valve (318) to the coarse pitch chamber (349); and
output a fourth control signal to cause the spool valve to move to a third position to block the hydraulic fluid from flowing into the fine pitch chamber (347) and the coarse pitch chamber (349).

12. The non-transitory computer readable storage medium of claim 11, wherein the instructions cause the one or more programmable circuits to prevent hydraulic fluid from reaching the fine pitch chamber (347) by outputting a fifth control signal to cause the spool valve (321) to move to one of the second position or the third position.

13. The non-transitory computer readable storage medium of any of claims 9-12, wherein the instructions cause the one or more programmable circuits to determine the pitch angle of the blade (106) based on information from a sensor (356).

14. The non-transitory computer readable storage medium of claim 13, wherein the information from the sensor (356) corresponds to a position of a beta tube (345a).

15. The non-transitory computer readable storage medium of any of claims 13-14, wherein the information from the sensor (356) corresponds to the pitch angle of the blade (106).
